# EUROPÄISCHE PATENTSCHRIFT

(11) **EP 2 806 073 B1**
(45) Veröffentlichungstag und Bekanntmachung des Hinweises auf die Patenterteilung: **12.08.2020**
(21) Anmeldenummer: 14001151.1
(22) Anmeldetag: 06.09.2012
(51) Int. Cl.: E03C 1/084, E03C 1/02, G05D 7/01

(54) **Durchflussregler**
Flow regulator
Régulateur d'écoulement

(30) Priorität: 06.09.2011 DE 202011105376 U
(43) Veröffentlichungstag der Anmeldung: 26.11.2014
(62) Teilanmeldung aus: 12756119.9
(73) Patentinhaber: Neoperl GmbH, 79379 Müllheim (DE)
(72) Erfinder: Lacher, Wolf-Dieter, 79379 Müllheim (DE); Stein, Alexander, 79241 Ihringen (DE)
(74) Vertreter: Börjes-Pestalozza, Henrich

(56) Entgegenhaltungen:
- WO-A1-2011/006082
- WO-A1-2011/006272
- DE-A1- 4 436 193
- US-A- 3 523 559
- US-A- 5 209 265

## Beschreibung

Die Erfindung betrifft ein sanitäres Einbauteil mit einem Einsetzgehäuse, das in seinem Gehäuseinnenraum ein durchflussregelndes Funktionselement mit Durchflusslöchern hat, wobei die Durchflusslöcher jeweils von einer Umfangswandung umgrenzt sind, die unter dem Druck des zuströmenden Wassers derart gegen eine Rückstellkraft formveränderbar ist, dass die Durchflusslöcher einen Lochquerschnitt haben, der in Abhängigkeit vom Druck des zuströmenden Wassers zwischen einer Offenstellung und einer Minimalstellung mit demgegenüber reduziertem Lochquerschnitt variabel veränderbar ist.

Man hat bereits verschiedene sanitäre Einbauteile geschaffen, die beispielsweise als Strahlregler ausgebildet sind.

Die vorbekannten Strahlregler weisen regelmäßig ein Einsetzgehäuse auf, das unmittelbar oder unter Zuhilfenahme eines Auslaufmundstücks am Wasserauslauf einer sanitären Auslaufarmatur montierbar ist. Im Gehäuseinnenraum des Einsetzgehäuses ist ein Strahlzerleger vorgesehen, der Durchflusslöcher hat, welche das zuströmende Wasser in eine Vielzahl von Einzelstrahlen aufteilen. Die in den Durchflusslöchern erzeugten Einzelstrahlen erfahren eine derartige Beschleunigung, dass auf der Abströmseite des Strahlzerlegers ein Unterdruck entsteht. Mit Hilfe dieses auf der Abströmseite des Strahlzerlegers erzeugten Unterdrucks wird Umgebungsluft in den Gehäuseinnenraum des Einsetzgehäuses angesaugt, die dort mit den Einzelstrahlen durchmischt werden kann, bevor das derart mit Luft durchmischte Wasser als homogener, nicht-spritzender und perlend-weicher Gesamtstrahl aus dem Strahlreglergehäuse ausströmt.

Damit das Wasser unabhängig vom Wasserdruck ein bestimmtes festgelegtes Wasservolumen pro Zeiteinheit nicht übersteigt, hat man auch bereits Durchflussmengenregler geschaffen. So sind auch bereits Durchflussmengenregler vorbekannt, die einem Strahlregler in Durchflussrichtung vorgeschaltet oder zwischen einem solchen Strahlregler und einem zuströmseitigen Vorsatzsieb zwischengeschaltet werden können. Eine solche, aus Durchflussmengenregler und Strahlregler zusammengesetzte Funktionseinheit weist allerdings entweder eine vergleichsweise große Einbaulänge auf oder ist komplex und vielteilig aufgebaut.

Aus der US-A 5 209 265 kennt man bereits ein sanitäres Einbauteil der eingangs erwähnten Art, das als Durchflussmengenregler ausgebildet ist, welcher die Durchflussleistung auf einen druckunabhängigen festgelegten Maximalwert einzuregeln hat. Der vorbekannte Durchflussmengenregler weist einen zentralen Regeldorn auf, der entgegen der Durchströmrichtung in ein Durchflussloch vorsteht, das in einem aus elastischem Material bestehenden hülsenförmigen Drosselelement vorgesehen ist. Zwischen der das Durchflussloch umgrenzenden Innenumfangwandung im hülsenförmigen Drosselelement und dem Außenumfang des Regeldorns ist ein Regelspalt vorgesehen, der sich bei steigendem Druck des durchströmenden Mediums zunehmend verengt. Dabei wird das elastische Drosselelement unter dem Druck des anströmenden Wassers derart gestaucht, dass sich die das Durchflussloch umgrenzende Innenumfangswandung des elastischen Drosselelements mit steigendem Wasserdruck zunehmend an den zentralen Regeldorn annähert. Da der vorbekannte Durchflussmengenregler nur ein elastisches Drosselelement hat, das einen Regelspalt umgrenzt, ist zur Erzielung einer ausreichenden Durchflussleistung eine entsprechende Einbaulänge sowie ein entsprechender Durchmesser des Drosselelements erforderlich, die aber in dem Wasserauslauf einer Sanitärarmatur nicht immer zur Verfügung steht.

Man hat auch bereits ein sanitäres Einbauteil geschaffen, das als Strahlregler ausgebildet ist, der am Wasserauslauf einer sanitären Auslaufarmatur montiert werden kann (vgl. DE 44 36 193 A1). Der vorbekannte Strahlregler weist ein Einsetzgehäuse auf, das in seinem Gehäuseinnenraum ein durchflussreduzierendes Funktionselement hat. Das im Gehäuseinnenraum des Einsetzgehäuses vorgesehene Funktionselement weist eine Lochplatte auf, der separate Strömungskammern nachgeschaltet sind, an deren stromabwärts gelegenen Endbereich jeweils zumindest eine und vorzugsweise mehrere Wasseraustrittsdüsen angeordnet sind. Während eine zentrale Strömungskammer ventillos mit einer Eintrittsöffnung ausgebildet ist, sind parallel zu dieser ersten Strömungskammer weitere Strömungskammern vorgesehen, die jeweils von einem in seiner Schließstellung vorgespannten Ventil gesteuert sind, derart, dass vom anströmenden Wasser das jeweilige Ventil von einem bestimmten Staudruck des Wassers in seine Offenstellung gedrückt wird, und dass die Ventile bei zunehmendem Staudruck nacheinander geöffnet sowie bei abnehmendem Staudruck nacheinander geschlossen werden. Unabhängig von der Funktionsweise des durchflussreduzierenden Funktionselements sind die Wasseraustrittsdüsen in Form von elastischen Schlauchstücken ausgebildet, die durch Bohrungen im Gehäuseboden auf der Abströmseite des Strahlreglergehäuses vorstehen und in ihrer Elastizität so festgelegt sind, dass diese vorstehenden Schlauchstücke von einem Benutzer mit der Hand durch ein Überstreichen verformt werden können, so dass eventuelle Verkrustungen aus Kalk usw. leicht entfernbar sind. Da die im Funktionselement des vorbekannten Strahlreglers vorgesehenen Ventile bei zunehmendem Staudruck nacheinander öffnen und bei abnehmendem Staudruck nacheinander schließen, erhöht sich der lichte Durchflussquerschnitt des vorbekannten Strahlreglers mit zunehmendem Druck, so dass auch die Durchflussleistung zumindest in reduziertem Umfang steigt. Ein Einregeln der Durchflussleistung auf einen konstanten Maximalwert ist bei dem vorbekannten Strahlregler demgegenüber nicht vorgesehen.

Es besteht daher insbesondere die Aufgabe, ein sanitäres Einbauteil der eingangs erwähnten Art zu schaffen, welches das durchfließende Wasser druckunabhängig auf ein festgelegtes maximales Durchflussvolumen pro Zeiteinheit einregeln kann und das dennoch vergleichsweise kompakt und einfach aufgebaut ist.

Die erfindungsgemäße Lösung dieser Aufgabe besteht bei dem sanitären Einbauteil der eingangs erwähnten Art insbesondere darin,
- dass das Funktionselement zumindest zweiteilig ausgestaltet ist und wenigstens ein, die Umfangswandungen umfassendes Funktionsteil und ein, das wenigstens eine Funktionsteil tragendes Trägerteil aufweist,
- dass die jeweils ein Durchflussloch umgrenzenden Umfangswandungen jeweils als düsenförmige Ausformung des Funktionsteiles ausgestaltet sind,
- dass das Funktionssteil abströmseitig eine Mehrzahl von Ausformungen aufweist, die jeweils in ein Einsetzloch im Trägerteil vorstehen,
- dass die auf der Abströmseite des Funktionsteiles vorgesehenen Ausformungen einerseits und die auf der benachbarten Flachseite des Trägerteils angeordneten und die Ausformungen in sich aufnehmenden Einsetzlöcher andererseits in ihrer Formgebung aufeinander abgestimmt sind,
- dass die Rückstellkraft durch die rückstellende Bauteilsteifigkeit der jeweils ein Durchflussloch umgrenzenden Umfangswandungen und/oder die Eigenelastizität des für die Umfangswandungen verwendeten Materials gebildet ist, und
- dass mit zunehmendem Wasserdruck der Lochquerschnitt der Durchflusslöcher derart zunehmend reduziert wird, dass ein festgelegter, vom Wasserdruck unabhängiger maximaler Volumenstrom nicht überschritten wird.

Das erfindungsgemäße Einbauteil, das in eine Wasserleitung zwischengeschaltet oder am Wasserauslauf einer sanitären Auslaufarmatur montiert werden kann, weist im Gehäuseinnenraum seines Einsetzgehäuses ein durchflussregelndes Funktionselement auf. Dieses Funktionselement hat Durchflusslöcher, die jeweils von einer Umfangswandung umgrenzt sind, welche unter dem Druck des zuströmenden Wassers derart gegen eine Rückstellkraft formveränderbar ist, dass die Durchflusslöcher einen Lochquerschnitt haben, der in Abhängigkeit vom Druck des zuströmenden Wassers zwischen einer Offenstellung und einer Minimalstellung mit demgegenüber reduziertem Lochquerschnitt variabel veränderbar ist. Mit zunehmenden Wasserdruck wird somit der Lochquerschnitt der Durchflusslöcher ebenfalls derart zunehmend reduziert, dass unabhängig vom Wasserdruck ein bestimmter festgelegter maximaler Volumenstrom (Volumen pro Zeiteinheit) nicht überschritten wird. Bei abnehmendem Wasserdruck wird der Lochquerschnitt der Durchflusslöcher wieder zunehmend vergrößert, so dass bei einem geringen Anfangsdruck der der Offenstellung entsprechende Lochquerschnitt zur Verfügung steht. Das in dem erfindungsgemäßen Einbauteil vorgesehene durchflussregelnde Funktionselement macht einen zusätzlichen Durchflussmengenregler entbehrlich und erlaubt eine kompakte und einfache Ausgestaltung des erfindungsgemäßen sanitären Einbauteiles.

Die Erfindung sieht vor, dass das Funktionselement des erfindungsgemäßen Einbauteiles zumindest zweiteilig ausgestaltet ist und wenigstens ein, die Durchflusslöcher umgrenzenden Umfangswandungen umfassendes Funktionsteil sowie ein, das wenigstens eine Funktionsteil tragendes Trägerteil aufweist.

Sofern auf zumindest ein, zwischen Funktionsteil und Trägerteil wirksames Federelement verzichtet werden soll, ist es vorteilhaft, wenn das das wenigstens eine Funktionsteil tragende Trägerteil aus einem gegenüber dem zuströmseitigen Funktionsteil formstabilen Material hergestellt ist und/oder eine zumindest partiell demgegenüber höhere Bauteilsteifigkeit hat.

Eine Weiterbildung gemäß der Erfindung sieht vor, dass ein auf die Zuströmseite des Funktionselementes wenigstens im Bereich der Durchflusslöcher in Durchströmrichtung einwirkender Wasserdruck eine Formveränderung des Funktionsteiles oder eine Materialverdrängung am Funktionsteil bewirkt, die in eine radiale Einschnürbewegung der jeweils ein Durchflussloch umgrenzenden Umfangswandungen umsetzbar ist. Bei dieser weiterbildenden Ausführungsform kann der Wasserdruck, der wenigstens im Bereich der Durchflusslöcher auf die Zuströmseite des Funktionselementes in Durchströmrichtung einwirkt, eine Stauchung des Funktionselementes und damit eine Formveränderung oder eine Materialverdrängung bewirken, die gleichzeitig in eine entsprechende radiale Einschnürbewegung der die Durchflusslöcher umgrenzenden Umfangswandungen und somit in eine Reduktion des lichten Lochquerschnitts umsetzbar ist.

Dabei kann es vorteilhaft sein, wenn die durch den Wasserdruck bewirkte Formveränderung oder Materialverdrängung eine zumindest partielle Dickenreduktion, Querschnittsreduktion, Höhenreduktion oder Kompression des Funktionsteiles ist.

Eine bevorzugte Ausführungsform gemäß der Erfindung sieht vor, dass die jeweils ein Durchflussloch umgrenzenden Umfangswandungen eine Formgebung haben, die eine Druckbeaufschlagung durch den Wasserdruck in axialer Richtung in eine radiale Einschnürbewegung dieser Umfangswandung umsetzt. Durch die besondere Formgebung der jeweils ein Durchflussloch umgrenzenden Umfangswandungen kann die erfindungsgemäße Funktionseinheit den Durchfluss in einem definierten oder festgelegten Bereich einregeln.

Dabei sehen besonders einfache und funktionssichere Ausführungsbeispiele vor, dass die jeweils ein Durchflussloch umgrenzenden Umfangswandungen zur Umsetzung einer Druckbeaufschlagung in axialer Richtung in eine radiale Einschnürbewegung entweder an ihrem in Durchströmrichtung orientierten freien Endbereich außenumfangsseitig eine Auflaufschräge haben, die mit einer Gegenschräge am Trägerteil zusammenwirkt, oder eine Einschnürung aufweisen, mit einer in das Durchflussloch vorstehenden umlaufenden Biegezone. Bei diesen bevorzugten Ausführungsbeispielen weisen die, jeweils ein Durchflussloch umgrenzenden Umfangswandungen eine Formgebung auf, die eine Druckbeaufschlagung durch den Wasserdruck in axialer Richtung in eine definierte radiale Einschnürbewegung dieser Umfangswandungen umsetzt.

Erfindungsgemäss sind die, jeweils ein Durchflussloch umgrenzenden Umfangswandungen als düsenförmige Ausformungen des Funktionsteils ausgestaltet. Damit sich der Lochquerschnitt der Durchflusslöcher unter dem Druck des zuströmenden Wassers verändert, kann es vorteilhaft sein, wenn die düsenförmigen Ausformungen des Funktionsteils jeweils in ein Einsetzloch im Trägerteil eintauchen. Damit sich der Lochquerschnitt der Durchflusslöcher unter dem Druck des zuströmenden Wassers verändert, kann es vorteilhaft sein, wenn die Einsetzlöcher sich in Durchströmrichtung unter Bildung einer Gegenschräge derart vorzugsweise konisch verjüngen, dass eine axiale Vorschubbewegung der düsenförmigen Ausformung in eine radiale Einschnürbewegung beispielsweise zumindest im freien Endbereich der Ausformung umsetzbar ist. Bewirkt der auf das Funktionsteil zuströmseitig einwirkende Wasserdruck eine axiale Vorschubbewegung auch der an das Funktionsteil angeformten düsenförmigen Ausformungen, wird diese axiale Vorschubbewegung gleichzeitig in eine radiale Einschnürbewegung im Bereich der Ausformungen derart umgesetzt, dass sich der Lochquerschnitt der Durchflusslöcher von einer Offenstellung in Abhängigkeit vom Druck des zuströmenden Wassers zunehmend in eine Minimalstellung reduzierten Lochquerschnittes verändert.

Eine alternative Ausführungsform gemäß der Erfindung sieht vor, dass die düsenförmigen Ausformungen jeweils eine in axialer Richtung derart nachgiebige Formgebung und damit eine derart reduzierte Bauteilsteifigkeit haben, dass eine axiale Stauchung der düsenförmigen Ausformungen in eine radiale Einschnürbewegung im Bereich der Ausformungen umsetzbar ist.

Damit das erfindungsgemäß verwendete Funktionselement den Volumenstrom auf einen festgelegten Maximalwert einregeln kann, ist es zweckmäßig, wenn jeweils der zuströmseitige Stirnrand des eine Ausformung aufnehmenden Einsetzloches im Trägerteil die druckbedingte axiale Relativbewegung des Funktionsteils begrenzt. Da der zuströmseitige Stirnrand der im Trägerteil vorgesehenen Einsetzlöcher die druckbedingte axiale Relativbewegung der Funktionsteile begrenzt, wird auch die Einschnürbewegung im Bereich der Ausformungen derart definiert begrenzt, dass ein minimaler Lochquerschnitt nicht weiter unterschritten werden kann.

Damit eine axiale Relativbewegung der Ausformung in eine radiale Einschnürbewegung umgesetzt werden kann, kann es vorteilhaft sein, wenn der freie Stirnrand wenigstens einer Ausformung an einem Anschlag des Trägerteils, vorzugsweise an einer Anschlagsfläche, aufliegt.

Die einfache konstruktive Ausgestaltung und die leichte Herstellbarkeit des erfindungsgemäß verwendeten Funktionselements wird noch begünstigt, wenn das Funktionsteil einen scheiben- oder plattenförmigen Grundkörper hat und/oder wenn das Funktionsteil abströmseitig eine Mehrzahl von Ausformungen aufweist.

Damit sich die im Funktionselement vorgesehenen und jeweils ein Durchflussloch umgrenzenden Umfangswandungen bei abnehmendem Wasserdruck in Folge der auf die Umfangswandungen einwirkenden Rückstellkraft in seine der Offenstellung der Durchflusslöcher entsprechende Formgestalt praktisch automatisch zurückbewegen kann, sieht eine bevorzugte Ausführungsform gemäß der Erfindung vor, dass zumindest ein Federelement als Rückstellkraft dient, und dass die Rückstellkraft des zumindest einen Federelements auf wenigstens zwei, in Durchflussrichtung voneinander beabstandete Teilbereiche der formnachgiebigen Umfangswandung übertragbar ist. Diese als Rückstellkraft dienende Rückstellfeder oder dergleichen Federelement kann unmittelbar an den die Durchflusslöcher umgrenzenden Umfangswandungen angreifen; möglich ist aber auch, dass die Umfangswandungen an zwei voneinander beabstandeten Bauteilen gehalten sind, die ihrerseits durch zumindest ein Federelement auf Abstand gehalten werden. Dabei kann das zumindest eine Federelement als Wendel-Feder oder auch als gummielastisches Federelement ausgebildet sein.

Die Erfindung sieht vor, dass die rückstellende Bauteilsteifigkeit der Umfangswandungen der Durchflusslöcher und/oder die Eigenelastizität des für die die Umfangswandungen verwendeten Materials als Rückstellkraft vorgesehen ist. Bei dieser bevorzugten Ausführungsform kann die Anzahl der benötigten Federelemente reduziert oder auf solche Federelemente auch vollständig verzichtet werden. Eine solche Ausführungsform begünstigt daher die einfache Konstruktion und Herstellung des erfindungsgemäß vorgesehenen Funktionselementes und erleichtert dessen kompakte und platzsparende Ausgestaltung.

Eine besonders vorteilhafte Weiterbildung gemäß der Erfindung sieht vor, dass das sanitäre Einbauteil als Strahlregler ausgestaltet ist, der am Wasserauslauf einer sanitären Auslaufarmatur einen unvereinzelten Gesamtstrahl zu formen hat.

Bei einer solchen Ausführungsform gemäß der Erfindung kann vorteilhaft sein, wenn das Funktionselement des als Strahlregler ausgestalteten Einbauteiles als durchflussmengenregelnder Strahlzerleger ausgebildet ist. Dieser Strahlzerleger hat das zuströmende Wasser im Gehäuseinnenraum des Einsetzgehäuses zunächst in eine Vielzahl von Einzelstrahlen aufzuteilen, bevor diese Einzelstrahlen anschließend wieder zu einem unvereinzelten Gesamtstrahl am Wasserauslauf einer sanitären Auslaufarmatur zusammengeführt und geformt werden.

Das erfindungsgemäße Einbauteil kann bei Bedarf vorteilhaft als unbelüfteter Strahlregler ausgestaltet sein. Eine besonders vorteilhafte und bevorzugte Ausführungsform gemäß der Erfindung sieht jedoch vor, dass das sanitäre Einbauteil als belüfteter Strahlregler ausgebildet ist, und dass auf der (Es folgen die ursprünglichen Seiten 9 bis 14 der Beschreibung). Abströmseite des Strahlzerlegers am Gehäuseinnenumfang des Einsetzgehäuses zumindest eine Belüftungsöffnung vorgesehen ist, welche den Gehäuseinnenraum mit der Umgebungsluft verbindet. Das zu dem im Gehäuseinnenraum des Einsetzgehäuses befindlichen Strahlzerleger strömende Wasser erfährt im Bereich des Strahlzerlegers eine Geschwindigkeitserhöhung, die gemäß der Bernoullischen Gleichung auf der Abströmseite des Strahlzerlegers einen Unterdruck bewirkt. Durch den auf der Abströmseite des Strahlzerlegers gebildeten Unterdruck wird über die zumindest eine, am Gehäuseumfang vorgesehene Belüftungsöffnung Umgebungsluft angesaugt, die anschließend im Gehäuseinnenraum des Einsetzgehäuses mit dem durchströmenden Wasser zu einem perlend-weichen Wasserstrahl vermischt werden kann.

Um den mit dem Funktionselement verbundenen Konstruktions- und Herstellungsaufwand noch zusätzlich zu reduzieren, ist es zweckmäßig, wenn das Funktionselement an ein zuströmseitiges Gehäuseteil eines Strahlreglergehäuses angeformt ist und wenn das zuströmseitige Gehäuseteil mit einem abströmseitigen Gehäuseteil vorzugsweise lösbar verbindbar ist.

Möglich ist aber auch, dass das Funktionselement und vorzugsweise dessen Funktionsteil als ein in das Einsetzgehäuse und insbesondere in ein zuströmseitiges Gehäuseteil einsetzbares Einsetzteil ausgestaltet ist, und dass am Einsetzgehäuse beziehungsweise am Gehäuseteil und/oder am Umfangsrand des als Einsetzteil zuströmseitig ausgebildeten Funktionselementes beziehungsweise Funktionsteils wenigstens eine Dichtnase oder dergleichen Dichtvorsprung vorgesehen ist, der zwischen Einsetzgehäuse beziehungsweise Gehäuseteil einerseits und dem Funktionselement beziehungsweise seinem Funktionsteil andererseits radial abdichtet. Diese zumindest eine Dichtnase verhindert eine Leckage zumindest eines Wasseranteils äm erfindungsgemäßen sanitären Einbauteil vorbei.

Zweckmäßig ist es, wenn in das abströmseitige Gehäuseteil zumindest ein Einsetzteil einer Strahlreguliereinrichtung einsetzbar ist.

Eine bevorzugte Ausführungsform gemäß der Erfindung sieht vor, dass die Auslaufstirnseite des abströmseitigen Gehäuseteils eine als Strömungsgleichrichter ausgestaltete wabenzellenartige Lochstruktur, eine Gitterstruktur oder eine Netzstruktur bildet.

Damit das aus elastischem Material bestehende Funktionsteil unter dem Druck des zuströmenden Wassers seine Form verändern oder damit dessen Material verdrängt werden kann, ist es zweckmäßig, wenn ein zwischen dem Funktionsteil und dem Trägerteil vorgesehener Zwischenraum über zumindest einen Entlüftungskanal mit der Umgebungsluft und vorzugsweise mit der Umgebungsluft im Gehäuseinnenraum des Einsetzgehäuses verbunden ist.

Dabei sieht eine bevorzugte Ausführungsform gemäß der Erfindung vor, dass der zumindest eine Entlüftungskanal das Trägerteil durchsetzt und eine Kanalöffnung hat, die auf der Abströmseite des Trägerteils vorgesehen ist. Da auf der Abströmseite des Trägerteils beim Durchströmen des Wassers durch die Durchflussöffnungen regelmäßig ein Unterdruck entsteht, ist die Druckdifferenz auch im Bereich dieser Kanalöffnung am größten, so dass die Wirkung des Entlüftungskanals noch zusätzlich begünstigt wird.

Möglich ist aber auch, dass zusätzlich oder stattdessen der zumindest eine Entlüftungskanal das Funktionsteil durchsetzt und eine dem Zwischenraum abgewandte Kanalöffnung hat, die auf der Zuströmseite des Funktionsteils vorgesehen ist.

Um den Lochquerschnitt eines jeden Durchflussloches in Abhängigkeit vom Druck des zuströmenden Wassers auf einfache Weise verändern zu können, sieht eine bevorzugte Weiterbildung gemäß der Erfindung vor, dass das Funktionsteil und vorzugsweise dessen scheiben- oder plattenförmiger Grundkörper in einer unbelasteten Ausgangsstellung vom Trägerteil beabstandet ist und unter dem Druck des zuströmenden Wassers sich gegen die rückstellende Bauteilsteifigkeit und/oder die Eigenelastizität zumindest eines Teilbereiches des Funktionsteils dem Trägerteil annähert oder an das Trägerteil anlegt.

Um dazu auf den, unter dem Druck des zuströmenden Wassers in Richtung zum Trägerteil bewegten Grundkörper des Funktionsteiles eine in die Ausgangsstellung wirksame Rückstellkraft einwirken zu lassen, ist es vorteilhaft, wenn das Funktionsteil an seinem äußeren Umfangsrandbereich unverrückbar im Einsetzgehäuse gehalten ist.

Dabei sieht eine bevorzugte Ausführungsform gemäß der Erfindung vor, dass das Funktionsteil mit seinem äußeren Umfangsrandbereich auf dem benachbarten Umfangsrandbereich des Trägerteils aufliegt.

Damit das zwischen einer unbelasteten und vom Trägerteil beabstandeten Ausgangsstellung einerseits und einer in Richtung zum Trägerteil gedrückten Position andererseits bewegbare Funktionsteil bei nachlassendem Wasserdruck in die Ausgangsstellung zurückbewegt werden kann, ist es vorteilhaft, wenn zwischen dem Trägerteil und dem Funktionsteil zumindest ein vorzugsweise stiftförmiger Abstandhalter vorgesehen ist, der unter dem Druck des zuströmenden Wassers eine als Rückstellkraft wirksame elastische Verformung des Funktionsteils bewirkt. Dieser Abstandhalter kann beispielsweise an die Abströmseite des Funktionsteils einstückig angeformt und ebenfalls aus elastischem Material hergestellt sein, so dass ein solcher, vorgespannter oder druckbeaufschlagter Abstandhalter eine gummielastische Federwirkung ausübt. Ein vorteilhaftes Ausführungsbeispiel gemäß der Erfindung sieht daher vor, dass an das Funktionsteil abströmseitig zumindest ein stiftförmiger Abstandhalter einstückig angeformt ist, der unter dem Druck des zuströmenden Wassers eine als Rückstellkraft wirkende Verformung erfährt.

Eine andere Ausführungsform gemäß der Erfindung sieht demgegenüber vor, dass der zumindest eine Abstandhalter auf der Zuströmseite des Trägerteils einstückig angeformt ist. Dabei kann es vorteilhaft sein, wenn der Abstandhalter mit seinem freien Stiftende in eine hutförmige Ausformung des Funktionsteils eingreift oder eintaucht, und wenn die vorzugsweise dickenreduzierte Umfangswandung der hutförmigen Ausformung durch das unter Druck in Richtung zum Trägerteil bewegte Funktionsteil gummielastisch streckbar ist.

Eine besonders vorteilhafte und aus einer reduzierten Anzahl von Bauteilen bestehende Ausführung sieht vor, dass der auf dem benachbarten Umfangsrandbereich des Trägerteils aufliegende Umfangsrandbereich des Funktionsteils als Ringdichtung zwischen dem Einbauteil und einer zuströmseitigen Gegenfläche einer mit dem Einbauteil verbindbaren Auslaufarmatur ausgestaltet ist.

Damit bei der Montage des erfindungsgemäßen Einbauteiles am Wasserauslauf einer sanitären Auslaufarmatur sich der als Ringdichtung dienende Umfangsrandbereich des Funktionsteils nicht beispielsweise durch eine Drehbewegung unbeabsichtigt lösen und verformen kann, ist es zweckmäßig, wenn der äußere Umfangsrandbereich des Funktionsteiles und der benachbarte Umfangsrandbereich des Trägerteiles aneinander lösbar fixierbar sind.

Dabei sieht eine bevorzugte Ausführungsform gemäß der Erfindung vor, dass der äußere Umfangsrandbereich des Funktionsteils zumindest einen Hinterschnitt am benachbarten Umfangsrandbereich des Trägerteiles untergreift und dass eine Lösebewegung des den Hinterschnitt untergreifenden Umfangsrandbereiches des Funktionsteiles mittels eines: zuströmseitigen: und zumindest bereichsweise in das Funktionsteil einsetzbaren Bauteiles, insbesondere mittels einem Vorsatzsieb, blockierbar ist. Durch das in das Funktionsteil eingesetzte Bauteil, das beispielsweise ein Vorsatzsieb sein kann, wird der als Ringdichtung ausgestaltete Umfangsrandbereich des Funktionsteiles in seiner Position gehalten, in welcher dieser Umfangsrandbereich des Funktionsteiles den am Trägerteil vorgesehenen Hinterschnitt untergreift.

Damit sich die am freien Endbereich einer jeden Umfangswandung vorgesehene und beispielsweise durch eine konische Verjüngung des freien : Endbereichs einer düsenförmigen Ausformung gebildete Auflaufschräge auf der entsprechenden Gegenschräge am Trägerteil derart bewegen und verformen kann, ohne dass störende Reibkräfte dem entgegenwirken, ist es vorteilhaft, wenn das wenigstens eine Einsetzloch im Trägerteil in seinem sich: konisch verjüngenden Lochabschnitt in Umfangsrichtung voneinander beabstandete und insbesondere leistenförmige Gleitausformungen hat, die mit ihrer Längserstreckung zur Lochöffnung orientiert sind und die der freie Endbereich einer düsenförmigen Ausformung des Funktionsteiles beaufschlagt.

Weiterbildungen gemäß der Erfindung ergeben sich aus der Beschreibung in Verbindung mit den Zeichnungen. Nachstehend werden bevorzugte Ausführungsformen gemäß der Erfindung noch näher anhand der Zeichnung dargestellt.

Es zeigt:

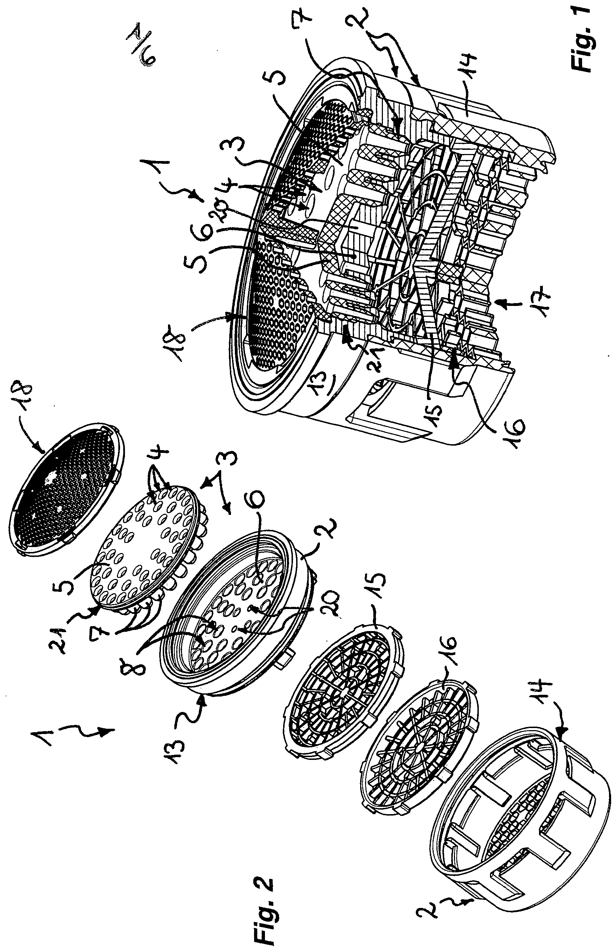

- Fig. 1: ein als Strahlregler ausgestaltetes und hier in einer teilweise aufgeschnittenen Perspektivdarstellung gezeigtes sanitäres Einbauteil mit einem Einsetzgehäuse, in dessen Gehäuseinnenraum ein als Strahlzerleger dienendes Funktionselement vorgesehen ist, das ein abströmseitiges Trägerteil und ein zuströmseitiges Funktionsteil aus demgegenüber elastischem Material aufweist, an welchem Funktionsteil mehrere, jeweils ein Durchflussloch umgrenzender Ausformungen angeformt sind, die jeweils derart in eine zuströmseitige Einformung im Trägerteil vorstehen, dass eine axiale Vorschubbewegung in eine radiale Einschnürbewegung: im freien Endbereich einer jeden Ausformung umsetzbar ist,
- Fig. 2: das Einbauteil aus Fig.1 in einer auseinandergezogenen Perspektivdarstellung seiner Bestandteile,
- Fig. 3: das mit dem: als Strahlzerleger ausgebildeten Funktionselement verbundene zuströmseitige Gehäuseteil des Strählreglers gemäß den Fig. 1 bis 2 in einer Draufsicht auf die Zuströmseite,
- Fig. 4: das mit dem als Strahlzerleger dienenden Funktionselement verbundene zuströmseitige Gehäuseteil aus Fig.3 in einem Längsschnitt durch Schnittebene IV-IV in Fig.3,
- Fig. 5: einen Detail-Längsschnitt des in Fig.4 gezeigten Funktionselements in der Offenstellung seiner Durchflusslöcher,
- Fig. 6: das mit dem Funktionselement verbundene zuströmseitige Gehäuseteil des sanitären Einbauteiles gemäß den Fig. 1 bis 3 in einer Draufsicht auf die Zuströmseite,
- Fig. 7: das mit dem als Strahlzerleger dienenden Funktionselement verbundene zuströmseitige Gehäuseteil in einem Längsschnitt durch Schnittebene VII-VII aus Fig.6,
- Fig. 8: einen Detail-Längsschnitt des bereits in Fig.7 gezeigten Funktionselements in der Minimalstellung seiner Durchflusslöcher,
- Fig. 9: ein mit Fig. 1 bis 8 vergleichbar ausgestaltetes und hier ebenfalls in einer teilweise aufgeschnittenen Perspektivdarstellung gezeigtes sanitäres Einbauteil, bei dem die an das Funktionsteil des Funktionselements angeformten düsenförmigen Ausformungen eine in axialer Richtung derart nachgiebige Formgebung und damit eine derart reduzierte Bauteilsteifigkeit aufweisen, dass eine axiale Stauchung der düsenförmigen Ausformungen in eine radiale Einschnürbewegung im Bereich dieser Ausformungen umsetzbar ist,
- Fig. 10: das sanitäre Einbauteil aus Fig.9 in einer auseinandergezogenen Perspektivdarstellung seiner Bestandteile,
- Fig. 11: das mit dem Funktionselement verbundene zuströmseitige Gehäuseteil des sanitären Einbauteiles gemäß den Fig.9 und 10 in einer Draufsicht auf die Zuströmseite,
- Fig. 12: das mit dem Funktionselement verbundene zuströmseitige Gehäuseteil des als Strahlregler ausgebildeten sanitären Einbauteiles gemäß den Fig.9 und 10 in einem Längsschnitt durch Schnittebene XII-XII in Fig.11,
- Fig. 13: einen Detail-Längsschnitt des als Strahlzerleger ausgebildeten Funktionselements aus Fig. 12 in der Offenstellung seiner Durchflusslöcher,
- Fig. 14: das mit dem als Strahlzerleger dienenden Funktionselement verbundene zuströmseitige Gehäuseteil des als Strahlregler ausgebildeten sanitären Einbauteiles gemäß den Fig. 9 und 10 in einer Draufsicht auf die Zuströmseite,
- Fig. 15: das mit dem als Strahlzerleger ausgebildeten Funktionselement verbundene Gehäuseteil aus Fig_{.} 14 in einem Längsschnitt durch Schnittebene XV-XV in Fig.14,
- Fig. 16: einen Detail-Längsschnitt des als Strahlzerleger dienenden Funktionselements aus Fig.14 und 15 in der Minimalstellung seiner Durchflusslöcher,
- Fig. 17: ein weiteres Ausführungsbeispiel des mit dem als Strahlzerleger dienenden Funktionselement verbundenen zuströmseitigen und mit Fig.7 vergleichbaren Gehäuseteiles,
- Fig. 18: das Gehäuseteil aus Fig.17 in einem Detail-Längsschnitt in dem in Fig.17 gekennzeichneten Bereich,
- Fig. 19: das mit dem als Strahlzerleger dienenden Funktionselement verbundene zuströmseitige Gehäuseteil des als Strahlregler ausgebildeten sanitären Einbauteiles gemäß Fig.17 und 18, wobei in Figur 19 die Schnittebene des in Fig.17 gezeigten Längsschnittes angedeutet ist, und
- Fig. 20: das als Strahlzerleger dienende Funktionselement aus den Fig.17 bis 19 in einer perspektivischen Einzelteildarstellung.

In den Fig. 1 bis 8, Fig. 9 bis 16 und Fig. 17 bis 20 sind drei verschiedene Ausführungen 1, 100 und 101 eines sanitären Einbauteiles und seiner wesentlichen Bestandteile dargestellt.

Die sanitären Einbauteile 1, 100, 101 weisen ein Einsetzgehäuse 2 auf, das unmittelbar oder - wie hier - mit Hilfe eines nicht weiter gezeigten Auslaufmundstücks am Wasserauslauf einer sanitären Auslaufarmatur montierbar ist.

Im Gehäuseinnenraum des Einsetzgehäuses 2 ist ein als Strahlzerleger ausgebildetes Funktionselement 3 vorgesehen, das eine Vielzahl von Durchflusslöchern 4 hat, die das zuströmende Wasser in eine entsprechende Vielzahl von Einzelstrahlen aufteilen.

Vorzugsweise - wie hier - alle Durchflusslöcher 4 des Funktionselements 3 weisen einen hindernisfreien lichten Lochquerschnitt auf und sind von einer Umfangswandung umgrenzt, die unter dem Druck des zuströmendes Wassers derart gegen eine Rückstellkraft formveränderbar ist, dass die Durchflusslöcher 4 einen variablen Lochquerschnitt haben, der in Abhängigkeit vom Druck des zuströmenden Wassers zwischen einer Offenstellung und einer Minimalstellung mit demgegenüber reduziertem Lochquerschnitt veränderbar ist. Dabei ist hier die rückstellende Bauteilsteifigkeit der jeweils ein Durchflussloch 4 umgrenzenden Umfangswandungen und/oder die Eigenelastizität des für die Umfangswandungen verwendeten Materials als Rückstellkraft vorgesehen. Mit zunehmenden Wasserdruck wird somit der Lochquerschnitt ebenfalls derart zunehmend reduziert, dass unabhängig vom Wasserdruck ein bestimmter festgelegter maximaler Volumenstrom nicht überschritten wird. Bei abnehmendem Wasserdruck wird der Lochquerschnitt wieder zunehmend vergrößert, so dass bei einem geringen Anfangsdruck der der Offenstellung entsprechende Lochquerschnitt zur Verfügung steht. Das als Strahlzerleger ausgebildete Funktionselement 3 macht somit einen zusätzlichen Durchflussmengenregler entbehrlich und kann zudem das zuströmende Wasser in eine Vielzahl von Einzelstrahlen aufteilen, wobei das Funktionselement 3 die kompakte und einfache Ausgestaltung der hier dargestellten Einbauteile 1, 100, 101 wesentlich begünstigt.

Das durchflussregelnde Funktionselement 3 weist eine Vielzahl von Durchflusslöchern 4 auf, die strömungsgünstig und/oder düsenförmig ausgeführt sind. Durch die hohe Anzahl von Durchflusslöchern 4 im Funktionselement 3 und/oder durch die strömungsgünstige Ausgestaltung dieser Durchflusslöcher 4 wird ein geräuschbildender Strömungsabriss in diesem Bereich der Bauteile 1, 100, 101 verhindert und somit eine unerwünschte Geräuschbildung vermieden. Das Funktionselement 3 der sanitären Einbauteile 1, 100, 101 vereint somit die Funktion einer wirkungsvollen Strahlzerlegung einerseits und einer wirkungsvollen Durchflussmengenregulierurig andererseits in sich.

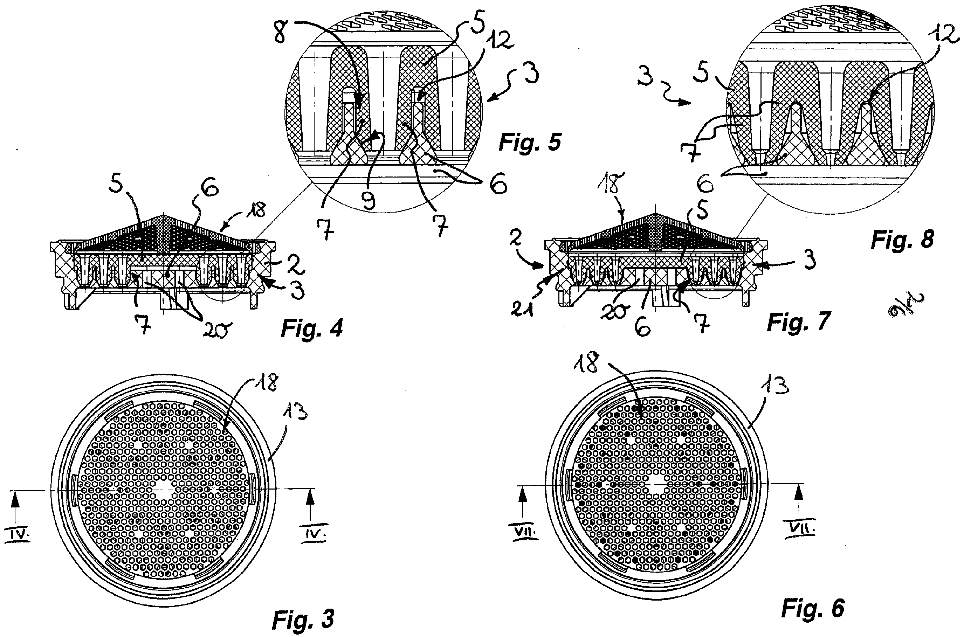

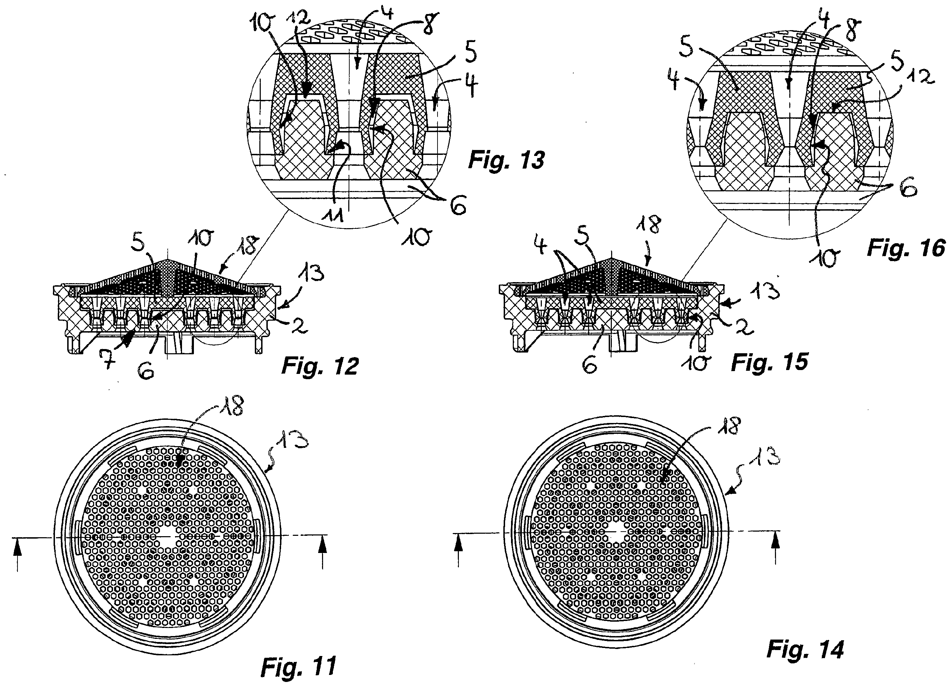

Aus einem Vergleich der Fig. 5 und 8 einerseits und der Fig. 13 und 16 andererseits, welche beispielhaft die im Funktionselement 3 vorgesehenen Durchflusslöcher 4 in ihrer Offenstellung und in ihrer, einen demgegenüber reduzierten Lochquerschnitt aufweisenden Minimalstellung zeigen, wird deutlich, dass ein auf die Zuströmseite des Funktionselements 3 wenigstens im Bereich der Durchflusslöcher 4 in Durchströmrichtung einwirkender Wasserdruck : eine FormVeränderung und hier eine Höhenreduktion des Funktionselements 3 bewirkt, die in eine radiale Einschnürbewegung der Durchflusslöcher 4 umsetzbar ist.

Das als Strahlzerleger ausgebildete Funktionselement 3 der hier dargestellten Einbauteile 1, 100, 101 ist dazu zumindest zweiteilig ausgestaltet und weist ein Funktionsteil 5 aus elastischem Material und/oder mit einer partiell reduzierten Bauteilsteifigkeit sowie ein, das Funktionsteil 5 tragendes Trägerteil 6 aus einem demgegenüber formstabilen Material auf. Das Funktionsteil 5 hat einen Scheiben- oder plattenförmigen Grundkörper 30, an dessen Abströmseite eine Vielzahl von düsenförmiger Ausformungen 7 vorstehen, die jeweils eine, ein Durchflussloch 4 umgrenzende Umfangswandung bilden. Jeder dieser düsenförmigen Ausformungen 7 steht in ein Einsetzloch 8 im Trägerteil 6 vor. Durch die Anzahl der Durchflusslöcher 4 im Funktionselement 3 und/oder durch die Formgebung der die Ausformungen 7 in sich aufnehmenden Einsetzlöcher 8 des Trägerteils 6 lässt sich der Volumenstrom des in den sanitären Einbauteilen 1, 100, 101 verwendeten Funktionselements 3 verändern. In den Fig. 1, 2, 4, 7 und 20 ist erkennbar, dass beispielsweise das Trägerteil 6 des Funktionselements 3 wenigstens einen Entlüftungskanal mit einer Kanalöffnung 20 aufweisen kann, die den zwischen Funktionsteil 5 und Trägerteil 6 angeordneten Zwischenraum 22 hier mit dem auf der Abströmseite des Funktionselements 3 angeordneten Bereich des Gehäuseinnenraums des Einbauteiles 1 verbindet. Dieser zumindest eine Entlüftungskanal wirkt einem übermäßig festen Anhaften des hier als Belag ausgebildeten Funktionsteils 5 am Trägerteil 6 entgegen, welches Anhaften andernfalls die Rückstellbewegung des Funktionsteils 5 in die Offenstellung des Funktionselementes 3 behindern könnte. Durch die zumindest eine Kanalöffnung 20 kann auch solches Leckwasser abfließen, das sich im Zwischenraum 22 zwischen Funktionsteil 5 und Trägerteil 6 befindet. Das Funktionsteil 5 des im Einbauteil 1 verwendeten Funktionselements 3 kann beispielsweise aus Silikon oder aus einem anderen elastischen Werkstoff hergestellt sein, welcher Werkstoff eine vergleichsweise geringe Werkstoffsteifigkeit aufweist.

In den Figuren 1 bis 18 ist angedeutet, dass die zumindest eine, ein Durchflussloch 4 umgrenzende Umfangswandung eine Formgebung hat, die eine Druckbeaufschlagung durch den Wasserdruck in axialer Richtung in eine radiale Einschnürbewegung dieser Umfangswandung umsetzt. Bei den in den Figuren 1 bis 8 und Figuren 17 bis 18 dargestellten Ausführungsbeispielen weisen die, jeweils ein Durchflussloch 4 umgrenzenden Umfangswandungen an ihrem, in Durchströmrichtung orientierten freien Endbereich außenumfangsseitig eine Auflaufschräge auf, die zur Umsetzung einer Druckbeaufschlagung in axialer Richtung in eine radiale Einschnürbewegung mit einer Gegenschräge am Trägerteil 6 zusammenwirkt.

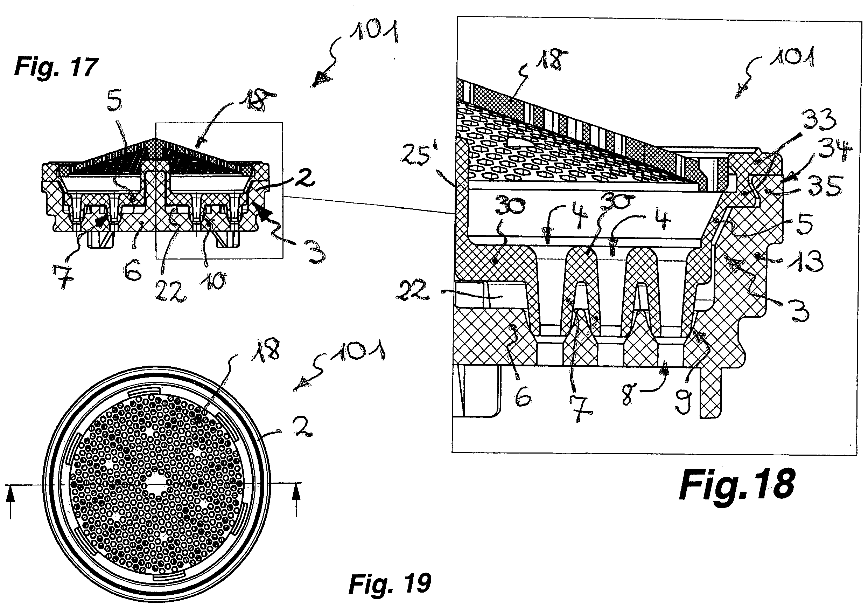

In den Fig. 1 bis 8 sowie den Fig. 17 bis 18 und insbesondere in den Fig. 5 und 18 ist erkennbar, dass dazu jedes Einsetzloch 8 in Durchströmrichtung derart vorzugsweise konisch verjüngt ist, dass eine axiale Vorschubbewegung der düsenförmigen Ausformungen 7 in eine radiale Einschnürbewegung zumindest im freien Endbereich dieser Ausformungen 7 umsetzbar ist. Die ein Einsetzloch 8 umgrenzende Umfangswandung des Trägerteils 6 verjüngt sich dazu an ihrem abströmseitigen Endbereich derart konisch, dass die Umfangswandung in diesem Teilbereich des Einsetzlochs 8 eine Gegenschräge 9 bildet, die bei einer druckbedingten axialen Vorschubbewegung des Funktionsteils 5 sowie der an ihn angeformten Ausformungen 7 die freien, sich konisch zu einer Auflaufschräge verjüngenden Endbereiche einer : jeden Ausformung 7 im Sinne einer Einschnürbewegung nach innen einformt.

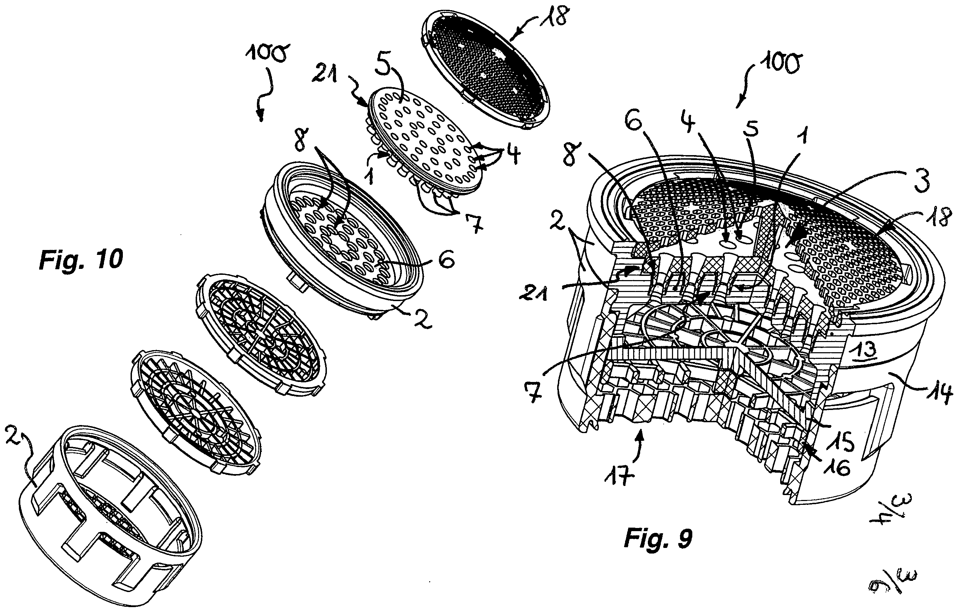

Bei dem in den Fig. 9 bis 16 gezeigten Ausführungsbeispiel 100 weisen die düsenförmigen Ausformungen 7 demgegenüber eine in axialer Richtung derart nachgiebige Formgebung und somit zusätzlich auch eine derart reduzierte Bauteilsteifigkeit auf, dass eine axiale Stauchung der düsenförmigen Ausformungen 7 in eine radiale Einschnürbewegung im Bereich der Ausformungen 7 umsetzbar ist. Auch die die Ausformungen 7 bildenden Umfangswandungen des in den Figuren 9 bis 16 gezeigten Ausführungsbeispieles 100 weisen eine Formgebung auf, die eine Druckbeaufschlagung durch den Wasserdruck in axialer Richtung in eine radiale Einschnürbewegung dieser Umfangswandungen umsetzt. Die bei dem Ausführungsbeispiel 100 vorgesehenen Umfangswandungen, die jeweils ein Durchflussloch 4 umgrenzen, haben dazu eine Einschnürung 10 mit einer in das Durchflussloch 4 vorstehenden umlaufenden Biegezone 31, die bei einer axialen Stauchung der Ausformungen 7 eine radiale Bewegung dieser Biegezone 31 in den lichten Lochquerschnitt des betreffenden Durchflussloches 4 bewirken und somit eine radiale Einschnürbewegung im Bereich der mittigen Einschnürungen 10 vorgeben. Um eine axiale Stauchung der an das Funktionsteil 5 angeformten Ausformungen 7 zu begünstigen, liegt der freie Stirnrand einer jeden Ausformung 7 an einem hier als Anschlagsflansch oder Anschlagsfläche 11 ausgebildeten Anschlag des Trägerteils 6 auf.

Aus einem Vergleich der Fig. 5 und 8 einerseits und der Fig. 13 und 16 andererseits ist erkennbar, dass der zuströmseitige Stirnrand 12 des eine Ausformung 7 aufnehmenden Einsatzlochs 8 im Trägerteil 6 einen Anschlag bildet, welcher die druckbedingte axiale Relativbewegung des Funktionsteils 5 begrenzt. Während das Funktionsteil 5 sich in der Offenstellung des Lochquerschnitts mit Abstand: oberhalb des als Anschlag dienenden Stirnrandes 12 befindet, liegt das Funktionsteil 5 in der Minimalstellung des Lochquerschnitts auf diesem Stirnrand 12 auf, wodurch die Einschnürbewegung begrenzt wird.

In den Fig. 1 und 9 ist erkennbar, dass die Einbauteile 1, 100, 101 hier als belüfteter Strahlregler ausgebildet sind, der einen unverzeinzelten Gesamtstrahl zu formen hat. Dabei ist das Funktionselement 3 der : als Strahlregler ausgestalteten Einbauteile 1, 100, 101 als durchflussmengenregelnder Strahlzerleger ausgebildet. Auf der Abströmseite des als Strahlzerleger dienenden Funktionselementes 3 ist am Gehäuseumfang des Einsetzgehäuses 2 zumindest eine Belüftungsöffnung 32 vorgesehen, die den Gehäuseinnenraum des Einsetzgehäuses 2 mit der Umgebungsluft verbindet. Da auf der Abströmseite des Strahlzerlegers beim Durchfließen des Wassers durch die Durchflusslöcher 4 ein Unterdruck entsteht, wird die Umgebungsluft durch die zumindest eine Belüftungsöffnung 32 in den Gehäuseinnenraum des Einsetzgehäuses 2 eingesaugt, um dort mit dem durchströmenden Wasser zu einem perlend-weichen Wasserstrahl geformt zu werden. Dabei ist das Trägerteil 6 des als Strahlzerleger ausgebildeten Funktionselements 3 an ein zuströmseitiges Gehäuseteil 13 des Einsetzgehäuses 2 einstückig angeformt. Das zuströmseitige Gehäuseteil 13 ist mit einem abströmseitigen Gehäuseteil 14 hier lösbar verbindbar; möglich ist aber auch, die Gehäuseteile 13 und 14 beispielsweise durch Verkleben oder Ultraschallschweißen unlösbar miteinander zu verbinden. Das vom Trägerteil 6 getragene Funktionsteil 5, das von der Zuströmseite aus in das Gehäuseteil 13 eingelegt ist und auch als elastischer Belag ausgebildet sein kann, weist an seinem Umfangsrand eine Dichtnase 21 auf, die ein unerwünschtes Eindringen von Leckwasser in den zwischen Funktionsteil 5 und Trägerteil 6 befindlichen Zwischenraum verhindern soll.

Die vom Funktionselement 3 gebildeten Einzelstrahlen werden derart beschleunigt, dass auf der Abströmseite des Funktionselements 3 ein Unterdruck entsteht. Durch den auf der Abströmseite des Funktionselements 3 erzeugten Unterdruck wird Umgebungsluft in den Gehäuseinnenraum angesaugt, die dort mit den Einzelstrahlen vermischbar ist. Die mit Umgebungsluft durchmischten Einzelstrahlen werden anschließend mit Hilfe des zumindest einen Einsetzteiles 15, 16 einer Strahlreguliereinrichtung abgebremst, welche Einsetzteile 15, 16 von der Zuströmseite aus in das hülsenförmige abströmseitige Gehäuseteil 14 eingesetzt sind. Diese : Einsetzteile 15, 16 der Strahlreguliereinrichtung können eine Gitter- oder Netzstruktur aus sich an Kreuzurigsknoten kreuzenden Stegen aufweisen. Nach Passieren eines abströmseitigen Strömungsgleichrichters 17, der die Auslaufstirnseite des Gehäuseteiles 14 bildet und eine wabenzellenartige Lochstruktur oder ebenfalls eine Gitter- oder Netzstruktur aufweisen kann, : tritt das ausströmende : Wasser als homogener, nicht-spritzender und perlend-weicher Gesamtstrahl aus.

Da die Kanalöffnung 20 des zumindest einen, das Trägerteil 6 durchsetzenden Entlüftungskanals auf der Abströmseite des Trägerteils 6 angeordnet ist, und da das durch die Durchflusslöcher 4 durchströmende Wasser in diesem Bereich einen Unterdruck erzeugt, ist die Druckdifferenz zur Atmosphäre in diesem Bereich am höchsten, um die entlüftende Wirkung des zumindest einen Entlüftungskanals zu begünstigen.

Das in den Figuren 17 bis 20 dargestellte Einbauteil 101 entspricht in seinem Aufbau weitestgehend den in den Fig. 1 bis 16 gezeigten Ausführungsbeispielen 1, 100. In den Fig. 17 und 18 ist gut zu erkennen, dass zwischen dem aus elastischem Material bestehenden Funktionsteil 5 und : dem demgegenüber formstabilen Trägerteil 6 ein Zwischenraum 22 vorgesehen ist, der durch den zumindest einen und hier als Trägerteil 6 durchsetzenden Entlüftungskanal entlüftet werden kann. In der in den Fig. 17 und 18 gezeigten unbelasteten Ausgangsstellung ist der scheiben- oder plattenförmige Grundkörper des Funktionsteiles 5 vom Trägerteil 6 unter Bildung des Zwischenraums 22 beabstandet. Unter dem Druck des zuströmenden Wassers nähert sich der Grundkörper des Funktionsteiles 5 gegen die Eigenelastizität des dafür verwendeten elastischen Materials an die Zuströmseite des Trägerteils 6 an.

Dabei werden die freien Endbereiche der düsenförmigen Ausformungen 7 gegen die eine Gegenschräge 9 bildende und sich konisch verjüngende Umfangswandung des zugeordneten und im Trägerteil 6 vorgesehenen Einsetzloches 8 gepresst, derart, dass diese axiale Bewegung des Funktionsteiles 5 und dessen dadurch entstehende Formveränderung in eine radiale Einschnürbewegung der wenigstens : einen, zumindest ein Durchflussloch 4 umgrenzenden Umfangswandung der düsenförmigen Ausformung 7 umsetzbar ist. Bei nachlassendem Wasserdruck bewegt sich das Funktionsteil 5 zurück in seine vom Trägerteil 6 beabstandete Ausgangsstellung, wobei die Durchflusslöcher 4 in den Ausformungen 7 wieder ihre Offenstellung einnehmen.

Um auf das vom Wasser in Richtung zum Trägerteil 6 gedrückte Funktionsteil 5 eine Rückstellkraft in Richtung zur Ausgangsstellung auszuüben, ist das Funktionsteil 5 an seinem äußeren Umfangsrandbereich unverrückbar im Einsatzgehäuse 2 gehalten. Dazu liegt das Funktionsteil 5 mit seinem äußeren Umfangsrandbereich 33 auf dem benachbarten zuströmseitigen Umfangsrandbereich 34 des Trägerteils 6 auf.

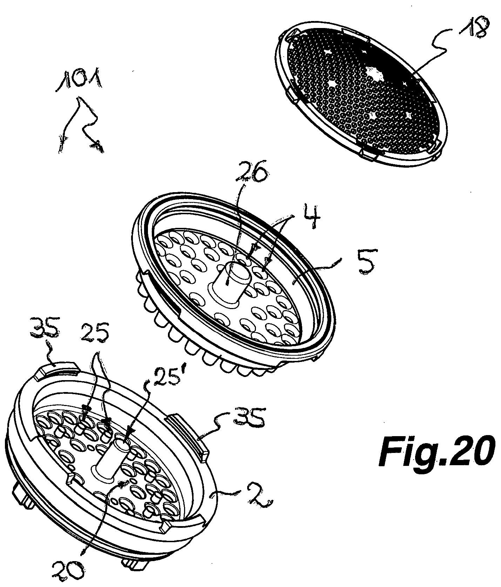

Aus einem Vergleich der Fig. 18 und 20 wird deutlich, dass zwischen dem Trägerteil 6 und dem Funktionsteil 5 vorzugsweise - wie hier - mehrere Abstandhalter 25, 25' vorgesehen sind, die an das Trägerteil 6 zuströmseitig einstückig angeformt sind. Diese Abstandhalter 25, 25' bewirken eine als Rückstellkraft wirksame elastische Verformung des aus elastischem Material hergestellten Funktionsteils 5, so dass bei nachlassendem Wasserdruck auch in den Bereichen der stiftförmigen Abstandhalter 25, 25' eine durch die Eigenelastizität des Funktionsteiles 5 ausgeübte Rückstellkraft auf das Funktionsteil 5 in Richtung zur Ausgangsstellung ausgeübt wird. Während der Abstandshalter 25' etwa mittig angeordnet ist und zentrierend in eine hutförmige Ausformung 23 am Funktionsteil 5 vorsteht, sind die übrigen Abstandshalter 25' in gleichem Abstand zum zentralen Abstandshalter 25' und in gleichmäßigen Abständen zueinander angeordnet. Der im Einsetzgehäuse 2 unverrückbar gehaltene Umfangsrandbereich 33 des elastischen Funktionsteiles 5 und die auf den elastischen Grundkörper des Funktionsteiles 5 einwirkenden Abstandhalter 25, 25' bilden eine gummielastische Rückstellkraft, die in Richtung zur Ausgangsstellung des Funktionsteiles 5 wirksam ist. Dabei kann die Rückstellkraft durch eine auf das Funktionsteil 5 beim Einbau : in das Einsetzgehäuse 2 aufgebrachte Vorspannung eingestellt werden. Eine solche Vorspannung ergibt sich beispielsweise bei einem deformierten Einbau des Funktionsteiles 5 und insbesondere seines scheiben- oder plattenförmigen Grundkörpers 30 in das Einsetzgehäuse 2. Auch ist es möglich, dass die freien Enden der Abstandhalter 25, 25' erst bei einem erhöhtem Wasserdruck von dem Funktionsteil 5 und insbesondere von dessen Grundkörper 30 beaufschlagt werden, wodurch sich in unbelastetem Zustand ein Spalt zwischen den freien Enden der Abstandhalter 25, 25' und dem Grundkörper 30 des Funktionsteils 5 ergibt und wodurch die angestrebte Rückstellkraft erst verzögert bei zunehmendem Wasserdruck anspricht. Stattdessen ist es aber auch möglich, dass das Funktionsteil 5 insbesondere mit seinem Grundkörper 30 auf den freien Stirnflächen der Abstandhalter 25, 25' aufliegt, so dass diese Abstandhalter 25, 25' im beaufschlagten Bereich des Grundkörpers 30 eine Materialstreckung oder -verdrängung bei steigendem Wasserdruck bewirken.

Aus der Fig. 18 wird deutlich, dass der äußere Umfangsrandbereich 33 des Funktiönsteiles 5 und der benachbarte Umfangsrandbereich 34 des Trägerteiles 6 aneinander lösbar fixierbar sind, so dass der Umfangsrandbereich 33 des Funktionsteiles 5 als rückstellende Zugfeder auf das Funktionsteil 5 einwirken kann. Dazu untergreift der äußere Umfangsrandbereich 33 des Funktionsteiles 5 zumindest einen Hinterschnitt am benachbarten Umfangsrandbereich 34 des Trägerteiles 6. Der zumindest eine Hinterschnitt ist hier an mehreren nasenförmigen Vorsprüngen 35 vorgesehen, die über den zuströmseitigen Stirnumfangsrand des Trägerteiles vorstehen. Ein zuströmseitiges Bauteil, das hier durch ein Vorsatzsieb 18 gebildet wird, ist derart in das Funktionsteil 5 einsetzbar, dass eine Lösebewegung des den Hinterschnitt untergreifenden Umfangsrandbereiches des Funktionsteiles 5 blockiert wird.

Den sanitären Einbauteilen 1, 100, 101 ist das Vorsatzsieb 18 vorgeschaltet, das auf der Zuströmseite des Gehäuseteils 17 mit diesem verbunden ist. Die im durchflussregelnden Funktionselement 3 vorgesehenen und jeweils ein Durchflussloch 4 umgrenzenden Umfangswandungen sind unter dem Druck des zuströmenden Wassers derart gegen eine Rückstellkraft formveränderbar, dass die Durchflusslöcher 4 in Abhängigkeit vom Druck des zuströmenden Wassers einen sich immer wieder ändernden Lochquerschnitt haben. Durch diese Gymnastizierung des zumindest in einem Teilbereich 5 aus elastischem Material hergestellten Funktionselements 3 wird einer Verkalkung und Verschmutzung in diesem Bereich der Einbauteile 1, 100, 101 entgegengewirkt. Da das Funktionsteil 5 in der Minimalstellung des Lochquerschnitts auf dem als Anschlag dienenden Stirnrand 12 des Trägerteils 6 aufliegt, wird die Einschnürbewegung der Durchflusslöcher 4 begrenzt und ein vollständiges Verschließen dieser Durchflusslöcher 4 vermieden.

**Bezugszeichenliste**

| | |
|---|---|
| Sanitäres Einbauteil | 1 |
| Einsetzgehäuse | 2 |
| Funktionselement | 3 |
| Durchflussloch | 4 |
| (zuströmseitiges) Funktionsteil (des Funktionselements 3) | 5 |
| Trägerteil | 6 |
| Ausformung | 7 |
| Einsetzloch | 8 |
| Gegenschräge (am Einsetzloch 8) | 9 |
| Einschnürung | 10 |
| Anschlagsfläche | 11 |
| (als Anschlag dienender) Stirnrand | 12 |
| (zuströmseitiges) Gehäuseteil | 13 |
| (abströmseitiges) Gehäuseteil | 14 |
| Einsetzteil (der Strahlreguliereinrichtung) | 15 |
| Einsetzteil (der Strahlreguliereinrichtung) | 16 |
| (abströmseitiger) Strömungsgleichrichter | 17 |
| Vorsatzsieb | 18 |
| Kanalöffnung | 20 |
| Dichtnase | 21 |
| Zwischenraum | 22 |
| Abstandhalter (am Trägerteil 6) 25' | 25, |
| Ausformung | 26 |
| Grundkörper (vom Funktionsteil 5) | 30 |
| Biegezone | 31 |
| Belüftungsöffnung | 32 |
| Umfangsrandbereich (am Funktionsteil 5) | 33 |
| Umfangsrandbereich (am Trägerteil 6) | 34 |
| Vorsprünge (als Hinterschnitt am Trägerteil 6) | 35 |
| Sanitäres Einbauteil 100 | |
| Sanitäres Einbauteil 101 | |

## Patentansprüche

1. Sanitäres Einbauteil (1, 100, 101) mit einem Einsetzgehäuse (2), das in seinem Gehäuseinnenraum ein durchflussregelndes Funktionselement (3) mit Durchflusslöchern (4) hat, wobei die Durchflusslöcher (4) jeweils von einer Umfangswandung umgrenzt sind, die unter dem Druck des zuströmenden Wassers derart gegen eine Rückstellkraft formveränderbar ist, dass die Durchflusslöcher (4) einen Lochquerschnitt haben, der in Abhängigkeit vom Druck des zuströmenden Wassers zwischen einer Offenstellung und einer Minimalstellung mit demgegenüber reduziertem Lochquerschnitt variabel veränderbar ist, wobei
- das Funktionselement (3) zumindest zweiteilig ausgestaltet ist und wenigstens ein, die Umfangswandungen umfassendes Funktionsteil (5) und ein das wenigstens eine Funktionsteil (5) tragendes Trägerteil (6) aufweist,
- die jeweils ein Durchflussloch (4) umgrenzenden Umfangswandungen jeweils als düsenförmige Ausformung (7) des Funktionsteils (5) ausgestaltet sind,
- das Funktionsteil (5) abströmseitig eine Mehrzahl von Ausformungen (7) aufweist, die jeweils in ein Einsetzloch (8) im Trägerteil (6) vorstehen,
- die auf der Abströmseite des Funktionsteiles (5) vorgesehenen Ausformungen (7) einerseits und die auf der benachbarten Flachseite des Trägerteils (6) angeordneten und die Ausformungen (7) in sich aufnehmenden Einsetzlöcher (8) andererseits in ihrer Formgebung aufeinander abgestimmt sind,
- die Rückstellkraft durch die rückstellende Bauteilsteifigkeit der jeweils ein Durchflussloch (4) umgrenzenden Umfangswandungen und/oder die Eigenelastizität des für die Umfangswandungen verwendeten Materials gebildet ist, und
- mit zunehmendem Wasserdruck der Lochquerschnitt der Durchflusslöcher (4) derart zunehmend reduziert wird, dass ein festgelegter, vom Wasserdruck unabhängiger maximaler Volumenstrom nicht überschritten wird.

2. Einbauteil nach Anspruch 1, **dadurch gekennzeichnet, dass** das Trägerteil (6) aus einem gegenüber dem zuströmseitigen Funktionsteil (5) formstabilen Material hergestellt ist und/oder eine zumindest partiell demgegenüber höhere Bauteilsteifigkeit hat.

3. Einbauteil nach einem der Ansprüche 1 oder 2, **dadurch gekennzeichnet, dass** ein auf die Zuströmseite des Funktionselements (3) wenigstens im Bereich der Durchflusslöcher (4) in Durchströmrichtung einwirkender Wasserdruck eine Höhenreduktion des Funktionselementes (3) bewirkt, die in eine radiale Einschnürbewegung der ein Durchflussloch (4) umgrenzenden Umfangswandungen umsetzbar ist.

4. Einbauteil nach einem der Ansprüche 1 bis 3, **dadurch gekennzeichnet, dass** ein auf die Zuströmseite des Funktionselementes (3) wenigstens im Bereich der Durchflusslöcher (4) in Durchströmrichtung einwirkender Wasserdruck eine Formveränderung des Funktionsteiles (5) oder eine Materialverdrängung am Funktionsteil (5) bewirkt, die in eine radiale Einschnürbewegung der jeweils ein Durchflussloch (4) umgrenzenden Umfangswandungen umsetzbar ist.

5. Einbauteil nach Anspruch 4, **dadurch gekennzeichnet, dass** die durch den Wasserdruck bewirkte Formveränderung oder Materialverdrängung eine zumindest partielle Dickenreduktion, Querschnittsreduktion, Höhenreduktion oder Kompression des Funktionsteiles ist.

6. Einbauteil nach einem der Ansprüche 1 bis 5, **dadurch gekennzeichnet, dass** die jeweils eine, ein Durchflussloch (4) umgrenzenden Umfangswandungen eine Formgebung haben, die eine Druckbeaufschlagung durch den Wasserdruck in axialer Richtung in eine radiale Einschnürbewegung dieser Umfangswandung umsetzt.

7. Einbauteil nach Anspruch 6, **dadurch gekennzeichnet, dass** die jeweils eine, ein Durchflussloch (4) umgrenzenden Umfangswandungen zur Umsetzung einer Druckbeaufschlagung in axialer Richtung in eine radiale Einschnürbewegung entweder an ihrem in Durchströmrichtung orientierten freien Endbereich außenumfangsseitig eine Auflaufschräge haben, die mit einer Gegenschräge (9) am Trägerteil (6) zusammenwirkt, oder eine Einschnürung (10) aufweisen, mit einer in das Durchflussloch (4) vorstehenden umlaufenden Biegezone (31) .

8. Einbauteil nach einem der Ansprüche 1 bis 7, **dadurch gekennzeichnet, dass** die düsenförmigen Ausformungen (7) des Funktionsteils (5) in die jeweiligen Einsetzlöchern (8) im Trägerteil (6) eintauchen.

9. Einbauteil nach Anspruch 8, **dadurch gekennzeichnet, dass** die Einsetzlöcher (8) sich in Durchströmrichtung derart vorzugsweise konisch verjüngen, dass eine axiale Vorschubbewegung der düsenförmigen Ausformungen (7) in eine radiale Einschnürbewegung im Bereich der Ausformungen (7) umsetzbar ist.

10. Einbauteil nach einem der Ansprüche 7 bis 9, **dadurch gekennzeichnet, dass** die düsenförmigen Ausformungen (7) eine in axialer Richtung derart nachgiebige Formgebung haben, dass eine axiale Stauchung der düsenförmigen Ausformungen (7) in eine radiale Einschnürbewegung im Bereich der Ausformungen (7) umsetzbar ist.

11. Einbauteil nach einem der Ansprüche 9 oder 10, **dadurch gekennzeichnet, dass** die in eine radiale Einschnürbewegung der jeweils ein Durchflussloch (4) umgrenzenden Umfangswandungen umsetzbare Relativbewegung zwischen dem Funktionsteil (5) und dem Trägerteil (6) des Funktionselements (3) durch zumindest einen Anschlag, insbesondere eine Anschlagsfläche (11), begrenzt ist.

12. Einbauteil nach einem der Ansprüche 1 bis 11, **dadurch gekennzeichnet, dass** jeweils der zuströmseitige Stirnrand (12) des eine Ausformung (7) aufnehmenden Einsetzloches (8) im Trägerteil (6) eine druckbedingte axiale Relativbewegung des Funktionsteils (5) begrenzt.

13. Einbauteil nach einem der Ansprüche 2 bis 12, **dadurch gekennzeichnet, dass** das Funktionsteil (5) einen scheiben- oder plattenförmigen Grundkörper (30) hat.

14. Einbauteil nach einem der Ansprüche 1 bis 13, **dadurch gekennzeichnet, dass** das sanitäre Einbauteil (1, 100, 101) als Strahlregler ausgestaltet ist, der am Wasserauslauf einer sanitären Auslaufarmatur einen unvereinzelten Gesamtstrahl zu formen hat.

15. Einbauteil nach Anspruch 14, **dadurch gekennzeichnet, dass** das Funktionselement (3) des als Strahlregler ausgestalteten Einbauteiles (1, 100, 101) als durchflussmengenregelnder Strahlzerleger ausgebildet ist.

16. Einbauteil nach Anspruch 15, **dadurch gekennzeichnet, dass** das sanitäre Einbauteil (1, 100, 101) als belüfteter Strahlregler ausgebildet ist und dass auf der Abströmseite des Strahlzerlegers am Gehäuseumfang des Einsetzgehäuses (2) zumindest eine Belüftungsöffnung (32) vorgesehen ist, welche den Gehäuseinnenraum des Einsetzgehäuses (2) mit der Umgebungsluft verbindet.

17. Einbauteil nach einem der Ansprüche 1 bis 16, **dadurch gekennzeichnet, dass** in ein abströmseitiges Gehäuseteil (14) des Einsetzgehäuses (2) zumindest ein Einsetzteil (15, 16) einer Strahlreguliereinrichtung einsetzbar ist.

18. Einbauteil nach Anspruch 17, **dadurch gekennzeichnet, dass** die Auslaufstirnseite des abströmseitigen Gehäuseteils (14) eine als Strömungsgleichrichter (17) ausgestaltete wabenzellenartige Lochstruktur, eine Gitterstruktur oder eine Netzstruktur bildet.

19. Einbauteil nach einem der Ansprüche 2 bis 18, **dadurch gekennzeichnet, dass** ein zwischen dem Funktionsteil (5) und dem Trägerteil (6) vorgesehener Zwischenraum (22) über zumindest einen Entlüftungskanal mit der Umgebungsluft und vorzugsweise mit der Umgebungsluft im Gehäuseinnenraum des Einsetzgehäuses (2) verbunden ist.

20. Einbauteil nach Anspruch 19, **dadurch gekennzeichnet, dass** der zumindest eine Entlüftungskanal das Trägerteil (6) durchsetzt und eine Kanalöffnung (20) hat, die auf der Abströmseite des Trägerteils (6) vorgesehen ist.

21. Einbauteil nach Anspruch 19 oder 20, **dadurch gekennzeichnet, dass** der zumindest eine Entlüftungskanal das Funktionsteil (5) durchsetzt und eine Kanalöffnung (20) hat, die auf der Zuströmseite des Funktionsteils (5) vorgesehen ist.

22. Einbauteil nach einem der Ansprüche 2 bis 21, **dadurch gekennzeichnet, dass** das Funktionsteil (5) und vorzugsweise dessen scheiben- oder plattenförmiger Grundkörper (30) in einer unbelasteten Ausgangsstellung vom Trägerteil (6) beabstandet ist und unter dem Druck des zuströmenden Wassers sich gegen die rückstellende Bauteilsteifigkeit und/oder die Eigenelastizität zumindest eines Teilbereiches des Funktionsteils (5) dem Trägerteil (6) annähert oder an das Trägerteil (6) anlegt.

23. Einbauteil nach einem der Ansprüche 2 bis 22, **dadurch gekennzeichnet, dass** das Funktionsteil (5) an seinem äußeren Umfangsrandbereich unverrückbar im Einsetzgehäuse (2) gehalten ist.

24. Einbauteil nach einem der Ansprüche 2 bis 23, **dadurch gekennzeichnet, dass** das Funktionsteil (5) mit seinem äußeren Umfangsrandbereich (33) auf dem benachbarten Umfangsrandbereich (34) des Trägerteils (6) aufliegt.

25. Einbauteil nach einem der Ansprüche 1 bis 24, **dadurch gekennzeichnet, dass** zwischen dem Trägerteil (6) und dem Funktionsteil (5) zumindest ein vorzugsweise stiftförmiger Abstandhalter (25, 25') vorgesehen ist, der unter dem Druck des zuströmenden Wassers eine als Rückstellkraft wirksame elastische Verformung des Funktionsteils (5) bewirkt.

26. Einbauteil nach einem der Ansprüche 1 bis 25, **dadurch gekennzeichnet, dass** an das Funktionsteil (5) abströmseitig zumindest ein stiftförmiger Abstandhalter einstückig angeformt ist, der unter dem Druck des zuströmenden Wassers eine als Rückstellkraft wirkende Verformung erfährt.

27. Einbauteil nach Anspruch 25, **dadurch gekennzeichnet, dass** 5der zumindest eine Abstandhalter (25, 25') auf der Zuströmseite des Trägerteils (6) einstückig angeformt ist.

28. Einbauteil nach Anspruch 25 oder 27, **dadurch gekennzeichnet, dass** zumindest einer der Abstandhalter (25') mit seinem freien Stiftende in eine hutförmige Ausformung (26) des Funktionsteils (5) eingreift, und dass die vorzugsweise dickenreduzierte Umfangswandung der hutförmigen Ausformung (26) durch das unter Druck in Richtung zum Trägerteil (6) bewegte Funktionsteil (5) gummielastisch streckbar ist.

29. Einbauteil nach Anspruch 24, **dadurch gekennzeichnet, dass** der auf dem benachbarten Umfangsrandbereich (34) des Trägerteils (6) aufliegende Umfangsrandbereich (33) des Funktionsteiles (5) als Ringdichtung zwischen dem Einbauteil (1, 100, 101) und einer zuströmseitigen Gegenfläche einer mit dem Einbauteil (1, 100, 101) verbindbaren Auslaufarmatur ausgestaltet ist.

30. Einbauteil nach Anspruch 24 oder 29, **dadurch gekennzeichnet, dass** der äußere Umfangsrandbereich (33) des Funktionsteiles (5) und der benachbarte Umfangsrandbereich (34) des Trägerteiles (6) aneinander lösbar fixierbar sind.

31. Einbauteil nach Anspruch 30, **dadurch gekennzeichnet, dass** der äußere Umfangsrandbereich (33) des Funktionsteiles (5) zumindest einen Hinterschnitt am benachbarten Umfangsrandbereich (34) des Trägerteiles (6) untergreift und dass eine Lösebewegung des den Hinterschnitt untergreifenden Umfangsrandbereiches (33) des Funktionsteils (5) mittels eines zuströmseitigen und zumindest bereichsweise in das Funktionsteil (5) einsetzbaren Bauteiles, insbesondere mittels einem Vorsatzsieb (18), blockierbar ist.

32. Einbauteil nach einem der Ansprüche 1 bis 31, **dadurch gekennzeichnet, dass** das wenigstens eine Einsetzloch (8) in seinem sich konisch verjüngenden Lochabschnitt in Umfangsrichtung voneinander beabstandete und insbesondere leistenförmige Gleitausformungen hat, die der freie Endbereich einer düsenförmigen Ausformung (7) des Funktionsteiles (5) beaufschlagt.

33. Einbauteil nach einem der Ansprüche 1 bis 32, **dadurch gekennzeichnet, dass** die Rückstellkraft des zumindest einen federnden Elementes auf wenigstens zwei, in Durchflussrichtung voneinander beabstandete Teilbereiche der formveränderbaren Umfangswandungen übertragbar ist.

## Claims

1. Sanitary installation part (1, 100, 101) having an insert housing (2) which has in its housing interior a throughflow-regulating functional element (3) with throughflow holes (4), wherein the throughflow holes (4) are each bounded by a circumferential wall which, under the pressure of the inflowing water, is changeable in shape counter to a restoring force such that the throughflow holes (4) have a hole cross section which is variably changeable between an open position and a minimal position, with a comparatively reduced hole cross section, in a manner dependent on the pressure of the inflowing water, wherein
- the functional element (3) is of at least two-part design and has at least one functional part (5), which comprises the circumferential walls, and one support part (6), which supports the at least one functional part (5),
- the circumferential walls bounding in each case one throughflow hole are each formed as a nozzle-like formation (7) of the functional part (5),
- the functional part (5) has on the outflow side a plurality of formations (7) which each project into an insert hole (8) in the support part (6),
- the formations (7) provided on the outflow side of the functional part (5), on the one hand, and the insert holes (8) arranged on the adjacent flat side of the support part (6) and receiving the formations (7) therein, on the other hand, are matched to one another in terms of their shaping,
- the restoring force is formed by the restoring component stiffness of the circumferential walls bounding in each case one throughflow hole (4) and/or by the inherent elasticity of the material used for the circumferential walls, and,
- with increasing water pressure, the hole cross section of the throughflow holes (4) is increasingly reduced such that a defined maximum volumetric flow rate, which is independent of the water pressure, is not exceeded.

2. Installation part according to Claim 1, **characterized in that** the support part (6) is produced from a material which is dimensionally stable in comparison with the inflow-side functional part (5), and/or has a component stiffness which is comparatively higher at least in part.

3. Installation part according to either of Claims 1 and 2, **characterized in that** a water pressure acting on the inflow side of the functional element (3) at least in the region of the throughflow holes (4) in the throughflow direction effects a reduction in the height of the functional element (3), which is convertible into a radial constricting movement of the circumferential walls bounding a throughflow hole (4).

4. Installation part according to one of Claims 1 to 3, **characterized in that** a water pressure acting on the inflow side of the functional element (3) at least in the region of the throughflow holes (4) in the throughflow direction effects a change in the shape of the functional part (5) or a displacement of material at the functional part (5), which is convertible into a radial constricting movement of the circumferential walls bounding in each case one throughflow hole (4).

5. Installation part according to Claim 4, **characterized in that** the change in shape or displacement of material effected by the water pressure is an at least partial reduction in the thickness, reduction in the cross section, reduction in the height or compression of the functional part.

6. Installation part according to one of Claims 1 to 5, **characterized in that** the in each case one circumferential walls bounding a throughflow hole (4) have a shaping which converts an application of pressure in the axial direction by the water pressure into a radial constricting movement of this circumferential wall.

7. Installation part according to Claim 6, **characterized in that**, for converting an application of pressure in the axial direction into a radial constricting movement, the in each case one circumferential walls bounding a throughflow hole (4) either have, at their free end regions, which are oriented in the throughflow direction, a run-on bevel on the outer circumferential side that interacts with a counterpart bevel (9) on the support part (6), or have a constriction (10) with a circumferential bending zone (31) projecting into the throughflow hole (4).

8. Installation part according to one of Claims 1 to 7, **characterized in that** the nozzle-like formations (7) of the functional part (5) dip into the respective insert holes (8) in the support part (6).

9. Installation part according to Claim 8, **characterized in that** the insert holes (8) narrow preferably conically in the throughflow direction such that an axial advancing movement of the nozzle-like formations (7) is convertible into a radial constricting movement in the region of the formations (7).

10. Installation part according to one of Claims 7 to 9, **characterized in that** the nozzle-like formations (7) have a flexible shaping in the axial direction such that an axial compression of the nozzle-like formations (7) is convertible into a radial constricting movement in the region of the formations (7).

11. Installation part according to either of Claims 9 and 10, **characterized in that** the relative movement between the functional part (5) and the support part (6) of the functional element (3), which relative movement is convertible into a radial constricting movement of the circumferential walls bounding in each case one throughflow hole (4), is limited by at least one stop, in particular by a stop surface (11) .

12. Installation part according to one of Claims 1 to 11, **characterized in that** in each case the inflow-side end edge (12) of the insert hole (8), receiving a formation (7), in the support part (6) limits a pressure-induced axial relative movement of the functional part (5).

13. Installation part according to one of Claims 2 to 12, **characterized in that** the functional part (5) has a disc- or plate-like main body (30).

14. Installation part according to one of Claims 1 to 13, **characterized in that** the sanitary installation part (1, 100, 101) is designed as a jet regulator which has to form a consolidated complete jet at the water outlet of a sanitary outlet fitting.

15. Installation part according to Claim 14, **characterized in that** the functional element (3) of the installation part (1, 100, 101) designed as a jet regulator is designed as a throughflow rate-regulating jet splitter.

16. Installation part according to Claim 15, **characterized in that** the sanitary installation part (1, 100, 101) is designed as an aerated jet regulator, and **in that** at least one aeration opening (32) is provided on the outflow side of the jet splitter on the housing circumference of the insert housing (2) and connects the housing interior of the insert housing (2) to the ambient air.

17. Installation part according to one of Claims 1 to 16, **characterized in that** at least one insert part (15, 16) of a jet-regulating device is insertable into an outflow-side housing part (14) of the insert housing (2).

18. Installation part according to Claim 17, **characterized in that** the outlet end side of the outflow-side housing part (14) forms a honeycomblike hole structure, which is in the form of a flow straightener (17), a grid structure or a mesh structure.

19. Installation part according to one of Claims 2 to 18, **characterized in that** an intermediate space (22) provided between the functional part (5) and the support part (6) is connected via at least one deaeration duct to the ambient air, and preferably to the ambient air in the housing interior of the insert housing (2).

20. Installation part according to Claim 19, **characterized in that** the at least one deaeration duct passes through the support part (6) and has a duct opening (20) which is provided on the outflow side of the support part (6).

21. Installation part according to Claim 19 or 20, **characterized in that** the at least one deaeration duct passes through the functional part (5) and has a duct opening (20) which is provided on the inflow side of the functional part (5).

22. Installation part according to one of Claims 2 to 21, **characterized in that** the functional part (5), and preferably the disc- or plate-like main body (30) thereof, in an unloaded starting position, is spaced apart from the support part (6), and, under the pressure of the inflowing water, approaches the support part (6), or comes to bear against the support part (6), counter to the restoring component stiffness and/or the inherent elasticity of at least one sub-region of the functional part (5).

23. Installation part according to one of Claims 2 to 22, **characterized in that** the functional part (5) is held at its outer circumferential edge region so as to be immovable in the insert housing (2).

24. Installation part according to one of Claims 2 to 23, **characterized in that** the functional part (5) bears with its outer circumferential edge region (33) on the adjacent circumferential edge region (34) of the support part (6).

25. Installation part according to one of Claims 1 to 24, **characterized in that** at least one preferably pin-like spacer (25, 25') is provided between the support part (6) and the functional part (5) and, under the pressure of the inflowing water, effects an elastic deformation, acting as a restoring force, of the functional part (5).

26. Installation part according to one of Claims 1 to 25, **characterized in that** at least one pin-like spacer is formed integrally on the functional part (5) on the outflow side and, under the pressure of the inflowing water, undergoes a deformation acting as a restoring force.

27. Installation part according to Claim 25, **characterized in that** the at least one spacer (25, 25') is formed integrally on the inflow side of the support part (6).

28. Installation part according to Claim 25 or 27, **characterized in that** at least one of the spacers (25') engages with its free pin end into a hat-like formation (26) of the functional part (3), and **in that** the preferably thickness-reduced circumferential wall of the hat-like formation (26) is stretchable in a rubber-elastic manner by the functional part (5) which is moved under pressure in the direction of the support part (6).

29. Installation part according to Claim 24, **characterized in that** the circumferential edge region (33), bearing on the adjacent circumferential edge region (34) of the support part (6), of the functional part (5) is formed as a ring seal between the installation part (1, 100, 101) and an inflow-side counterpart surface of an outlet fitting which is connectable to the installation part (1, 100, 101) .

30. Installation part according to Claim 24 or 29, **characterized in that** the outer circumferential edge region (33) of the functional part (5) and the adjacent circumferential edge region (34) of the support part (6) are fixable in a detachable manner to one another.

31. Installation part according to Claim 30, **characterized in that** the outer circumferential edge region (33) of the functional part (5) engages beneath at least one undercut on the adjacent circumferential edge region (34) of the support part (6), and **in that** a detaching movement of the circumferential edge region (33), engaging beneath the undercut, of the functional part (5) is blockable by means of an inflow-side component which is at least regionally insertable into the functional part (5), in particular by means of an upstream screen (18).

32. Installation part according to one of Claims 1 to 31, **characterized in that** the at least one insertion hole (8) has in its conically narrowing hole portion in particular bar-like sliding formations, which are spaced apart from one another in the circumferential direction and are acted upon by the free end region of a nozzle-like formation (7) of the functional part (5).

33. Installation part according to one of Claims 1 to 32, **characterized in that** the restoring force of the at least one resilient element is transmissible to at least two sub-regions, spaced apart from one another in the throughflow direction, of the circumferential walls which are changeable in shape.

## Revendications

1. Composant sanitaire (1, 100, 101) comprenant un boîtier d'insertion (2), qui présente dans son espace intérieur de boîtier un élément fonctionnel régulateur d'écoulement (3) qui comporte des trous d'écoulement (4), dans lequel les trous d'écoulement (4) sont respectivement entourés par une paroi périphérique, qui peut changer de forme sous la pression de l'eau qui arrive contre une force de rappel, de telle manière que les trous d'écoulement (4) présentent une section transversale de trou, qui peut changer de façon variable en fonction de la pression de l'eau qui arrive entre une position ouverte et une position minimale avec une section transversale de trou réduite par rapport à celle-ci,
dans lequel:
- l'élément fonctionnel (3) est réalisé en au moins deux parties et présente au moins une partie fonctionnelle (5) comprenant les parois périphériques et une partie de support (6) portant ladite au moins une partie fonctionnelle (5),
- les parois périphériques qui entourent respectivement un trou d'écoulement (4) sont réalisées respectivement sous la forme d'une protubérance en forme de buse (7) de la partie fonctionnelle (5),
- la partie fonctionnelle (5) comporte du côté aval une multiplicité de protubérances (7), qui sont en saillie respectivement dans un trou d'insertion (8) dans la partie de support (6),
- les protubérances (7) prévues sur le côté aval de la partie fonctionnelle (5) d'une part et les trous d'insertion (8) disposés sur la face plate voisine de la partie de support (6) et recevant les protubérances (7) d'autre part présentent une forme adaptée les unes aux autres,
- la force de rappel est formée par la raideur de rappel de composant des parois périphériques qui entourent respectivement un trou d'écoulement (4) et/ou par l'élasticité propre du matériau utilisé pour les parois périphériques, et
- lorsque la pression de l'eau augmente, la section transversale de trou des trous d'écoulement (4) est réduite de plus en plus, de telle manière qu'un débit volumique maximal fixé, indépendant de la pression de l'eau, ne soit pas dépassé.

2. Composant selon la revendication 1, **caractérisé en ce que** la partie de support (6) est fabriquée en un matériau de forme stable par rapport à la partie fonctionnelle (5) côté amont et/ou présente une raideur de composant au moins partiellement plus élevée par rapport à celle-ci.

3. Composant selon une des revendications 1 ou 2, **caractérisé en ce qu'**une pression d'eau agissant dans la direction d'écoulement sur le côté amont de l'élément fonctionnel (3) au moins dans la région des trous d'écoulement (4) provoque une réduction de hauteur de l'élément fonctionnel (3), qui peut être convertie en un mouvement radial de rétrécissement des parois périphériques qui entourent un trou d'écoulement (4).

4. Composant selon l'une quelconque des revendications 1 à 3, **caractérisé en ce qu'**une pression d'eau agissant dans la direction d'écoulement sur le côté amont de l'élément fonctionnel (3) au moins dans la région des trous d'écoulement (4) provoque un changement de forme de la partie fonctionnelle (5) ou un refoulement de matière sur la partie fonctionnelle (5), qui peut être converti en un mouvement radial de rétrécissement des parois périphériques qui entourent respectivement un trou d'écoulement (4).

5. Composant selon la revendication 4, **caractérisé en ce que** le changement de forme ou le refoulement de matière provoqué par la pression d'eau est une réduction d'épaisseur, une réduction de section transversale, une réduction de hauteur ou une compression au moins partielle de la partie fonctionnelle.

6. Composant selon l'une quelconque des revendications 1 à 5, **caractérisé en ce que** les parois périphériques qui entourent respectivement un trou d'écoulement (4) présentent une forme qui convertit une action de pression due à la pression d'eau dans la direction axiale en un mouvement radial de rétrécissement de cette paroi périphérique.

7. Composant selon la revendication 6, **caractérisé en ce que**, pour la conversion d'une action de pression dans la direction axiale en un mouvement radial de rétrécissement, les parois périphériques qui entourent respectivement un trou d'écoulement (4) soit présentent en périphérie extérieure un chanfrein d'entrée au niveau de leur région d'extrémité libre orientée dans la direction d'écoulement, qui coopère avec un chanfrein opposé (9) sur la partie de support (6), soit présentent un rétrécissement (10), avec une zone de flexion périphérique (31) qui fait saillie dans le trou d'écoulement (4).

8. Composant selon l'une quelconque des revendications 1 à 7, **caractérisé en ce que** les protubérances en forme de buse (7) de la partie fonctionnelle (5) plongent dans les trous d'insertion respectifs (8) dans la partie de support (6).

9. Composant selon la revendication 8, **caractérisé en ce que** les trous d'insertion (8) se rétrécissent de préférence en cône dans la direction d'écoulement, de telle manière qu'un mouvement d'avancement axial des protubérances en forme de buse (7) puisse être converti en un mouvement radial de rétrécissement dans la région des protubérances (7).

10. Composant selon l'une quelconque des revendications 7 à 9, **caractérisé en ce que** les protubérances en forme de buse (7) présentent dans la direction axiale une forme déformable, de telle manière qu'un écrasement axial des protubérances en forme de buse (7) puisse être converti en un mouvement radial de rétrécissement dans la région des protubérances (7).

11. Composant selon une des revendications 9 ou 10, **caractérisé en ce que** le mouvement relatif entre la partie fonctionnelle (5) et la partie de support (6) de l'élément fonctionnel (3) qui peut être converti en un mouvement radial de rétrécissement des parois périphériques qui entourent respectivement un trou d'écoulement (4) est limité par au moins une butée, en particulier une face de butée (11).

12. Composant selon l'une quelconque des revendications 1 à 11, **caractérisé en ce que** le bord frontal amont (12) du trou d'insertion (8) dans la partie de support (6) recevant une protubérance (7) limite un mouvement relatif axial de la partie fonctionnelle (5) .

13. Composant selon l'une quelconque des revendications 2 à 12, **caractérisé en ce que** la partie fonctionnelle (5) comporte un corps de base en forme de disque ou en forme de plaque (30).

14. Composant selon l'une quelconque des revendications 1 à 13, **caractérisé en ce que** le composant sanitaire (1, 100, 101) est constitué par un régulateur de jet, qui doit former à la sortie d'eau d'une robinetterie de sortie sanitaire un jet total non divisé.

15. Composant selon la revendication 14, **caractérisé en ce que** l'élément fonctionnel (3) du composant (1, 100, 101) constitué par un régulateur de jet est réalisé sous la forme d'un brise-jet de régulation du débit.

16. Composant selon la revendication 15, **caractérisé en ce que** le composant sanitaire (1, 100, 101) est constitué par un régulateur de jet aéré, et **en ce qu'**il est prévu sur le côté aval du brise-jet, au niveau de la périphérie de boîtier du boîtier d'insertion (2), au moins une ouverture d'aération (32), qui met en communication l'espace intérieur de boîtier du boîtier d'insertion (2) avec l'air ambiant.

17. Composant selon l'une quelconque des revendications 1 à 16, **caractérisé en ce qu'**au moins une partie d'insertion (15, 16) d'un dispositif de régulation de jet peut être insérée dans une partie de boîtier aval (14) du boîtier d'insertion (2).

18. Composant selon la revendication 17, **caractérisé en ce que** le côté frontal de sortie de la partie de boîtier aval (14) forme une structure perforée à la manière d'un nid d'abeilles réalisée sous la forme d'un redresseur d'écoulement (17), une structure de grille ou une structure de filet.

19. Composant selon l'une quelconque des revendications 2 à 18, **caractérisé en ce qu'**une chambre intermédiaire (22) prévue entre la partie fonctionnelle (5) et la partie de support (6) est reliée par au moins un canal de ventilation à l'air ambiant et de préférence à l'air ambiant dans l'espace intérieur de boîtier du boîtier d'insertion (2).

20. Composant selon la revendication 19, **caractérisé en ce que** ledit au moins un canal de ventilation traverse la partie de support (6) et présente une ouverture de canal (20), qui est prévue sur le côté aval de la partie de support (6).

21. Composant selon la revendication 19 ou 20, **caractérisé en ce que** ledit au moins un canal de ventilation traverse la partie fonctionnelle (5) et présente une ouverture de canal (20), qui est prévue sur le côté amont de la partie fonctionnelle (5).

22. Composant selon l'une quelconque des revendications 2 à 21, **caractérisé en ce que** la partie fonctionnelle (5) et de préférence son corps de base (30) en forme de disque ou en forme de plaque est, dans un état initial non chargé, espacée de la partie de support (6) et se rapproche de la partie de support (6) ou s'applique sur la partie de support (6) sous la pression de l'eau qui arrive, contre la raideur de rappel du composant et/ou contre l'élasticité propre d'au moins une zone partielle de la partie fonctionnelle (5).

23. Composant selon l'une quelconque des revendications 2 à 22, **caractérisé en ce que** la partie fonctionnelle (5) est maintenue au niveau de sa zone de bord périphérique extérieure de façon non déplaçable dans le boîtier d'insertion (2).

24. Composant selon l'une quelconque des revendications 2 à 23, **caractérisé en ce que** la partie fonctionnelle (5) s'applique avec sa zone de bord périphérique extérieure (33) sur la zone de bord périphérique voisine (34) de la partie de support (6).

25. Composant selon l'une quelconque des revendications 1 à 24, **caractérisé en ce qu'**il est prévu entre la partie de support (6) et la partie fonctionnelle (5) au moins un élément d'écartement de préférence en forme de tige (25, 25'), qui provoque, sous la pression de l'eau qui arrive, une déformation élastique de la partie fonctionnelle (5), qui opère comme une force de rappel.

26. Composant selon l'une quelconque des revendications 1 à 25, **caractérisé en ce qu'**au moins un élément d'écartement en forme de tige est réalisé d'une seule pièce du côté aval sur la partie fonctionnelle (5), lequel subit sous la pression de l'eau qui arrive une déformation qui opère comme une force de rappel.

27. Composant selon la revendication 25, **caractérisé en ce que** ledit au moins un élément d'écartement (25, 25') est formé d'une seule pièce sur le côté amont de la partie de support (6).

28. Composant selon la revendication 25 ou 27, **caractérisé en ce qu'**au moins un des éléments d'écartement (25') s'engage avec son extrémité de tige libre dans une protubérance en forme de chapeau (26) de la partie fonctionnelle (5), et **en ce que** la paroi périphérique d'épaisseur de préférence réduite de la protubérance en forme de chapeau (26) peut être étendue de façon élastique par la partie fonctionnelle (5) qui est déplacée sous pression en direction de la partie de support (6).

29. Composant selon la revendication 24, **caractérisé en ce que** la zone de bord périphérique (33) de la partie fonctionnelle (5) appliquée sur la zone de bord périphérique voisine (34) de la partie de support (6) est réalisée sous la forme d'un joint annulaire entre le composant (1, 100, 101) et une face opposée amont d'une robinetterie de sortie pouvant être assemblée au composant (1, 100, 101).

30. Composant selon la revendication 24 ou 29, **caractérisé en ce que** la zone de bord périphérique extérieure (33) de la partie fonctionnelle (5) et la zone de bord périphérique voisine (34) de la partie de support (6) peuvent être fixées l'une à l'autre de façon séparable.

31. Composant selon la revendication 30, **caractérisé en ce que** la zone de bord périphérique extérieure (33) de la partie fonctionnelle (5) s'engage en dessous d'au moins une contre-dépouille sur la zone de bord périphérique voisine (34) de la partie de support (6), et **en ce qu'**un mouvement de libération de la zone de bord périphérique (33) de la partie fonctionnelle (5) engagée en dessous de la contre-dépouille peut être bloqué au moyen d'un composant insérable côté amont et au moins localement dans la partie fonctionnelle (5), en particulier à l'aide d'un tamis d'entrée (18).

32. Composant selon l'une quelconque des revendications 1 à 31, **caractérisé en ce que** ledit au moins un trou d'insertion (8) comporte, dans sa partie de trou se rétrécissant en cône, des protubérances de glissement espacées les unes des autres dans la direction périphérique et en particulier en forme de réglettes, sur lesquelles agit la zone d'extrémité libre d'une protubérance en forme de buse (7) de la partie fonctionnelle (5).

33. Composant selon l'une quelconque des revendications 1 à 32, **caractérisé en ce que** la force de rappel dudit au moins un élément élastique peut être transmise à au moins deux zones partielles, espacées l'une de l'autre dans la direction d'écoulement, des parois périphériques de forme variable.
